(19) Europäisches Patentamt / European Patent Office / Office européen des brevets

(11) **EP 2 636 144 B1**

(12) **EUROPÄISCHE PATENTSCHRIFT**

(45) Veröffentlichungstag und Bekanntmachung des Hinweises auf die Patenterteilung:
**11.03.2015 Patentblatt 2015/11**

(21) Anmeldenummer: **11776410.0**

(22) Anmeldetag: **25.10.2011**

(51) Int Cl.:
*H02P 27/06* (2006.01)    *H02P 29/02* (2006.01)
*H02P 25/18* (2006.01)    *F03D 7/02* (2006.01)
*H02J 9/04* (2006.01)    *H02M 1/32* (2007.01)

(86) Internationale Anmeldenummer:
**PCT/EP2011/068670**

(87) Internationale Veröffentlichungsnummer:
**WO 2012/059368 (10.05.2012 Gazette 2012/19)**

(54) **NOTBETRIEBSFÄHIGE PITCHMOTOR-ANTRIEBSSCHALTUNG**

PITCH MOTOR DRIVE CIRCUIT WHICH CAN OPERATE IN EMERGENCY MODE

CIRCUIT D'ENTRAÎNEMENT D'UN MOTEUR DE CORRECTION DE PITCH APTE À FONCTIONNER EN RÉGIME DE SECOURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2010 DE 102010060380**

(43) Veröffentlichungstag der Anmeldung:
**11.09.2013 Patentblatt 2013/37**

(73) Patentinhaber: **LTi REEnergy GmbH
59423 Unna (DE)**

(72) Erfinder:
• **BÜNTE, Andreas
33378 Rheda-Wiedenbrück (DE)**
• **WERTZ, Harald
59494 Soest (DE)**
• **KLEINEN, Christian
58285 Gevelsberg (DE)**
• **GILL, Harry
58300 Wetter (DE)**

(74) Vertreter: **Spachmann, Holger et al
Stumpf Patentanwälte PartGmbB
Alte Weinsteige 71
70597 Stuttgart (DE)**

(56) Entgegenhaltungen:
EP-A1- 1 707 429    WO-A1-2009/058357
WO-A2-2010/034906    JP-A- 2009 273 348

## Beschreibung

<u>STAND DER TECHNIK</u>

Die vorliegende Erfindung betrifft eine notbetriebsfähige Motorantriebsschaltung für einen AC-Pitchantrieb einer Wind- oder Wasserkraftanlage, der zumindest eine Gleichrichtereinheit, zumindest einen DC-Zwischenkreis und zwei Wechselrichtereinheiten umfasst, wobei eine erste Kontaktseite der Motorstränge des Pitch-Drehstrommotors mit einer ersten Wechselrichtereinheit und eine zweite Kontaktseite der Motorstränge mit einer zweiten Wechselrichtereinheit zumindest bestromt werden kann.

Pitchantriebe werden in Wind- oder Wasserkraftanlagen zur Verstellung des Anströmwinkels eines Antriebsmediums gegenüber einem Blatt eines Rotors bzw. einer Turbine verwendet. Das Antriebsmedium ist im Falle einer Windkraftanlage ein anströmender Wind, im Falle einer Wasserkraftanlage anströmendes Wasser. Durch die motorische Verstellung des Pitches, d.h. des Anströmwinkels des Rotorblatts kann die Drehzahl der Energiegewinnungsanlage eingestellt werden, um beispielsweise bei geringen Strömungen eine möglichst hohe Effizienz zu erreichen und bei sehr hohen Strömungen eine Überlast verhindern zu können. üblicherweise sind Rotoren bzw. Turbinen mit jeweils einem Pitchtrieb pro Blatt versehen, jedoch existieren auch zentral angeordnete Pitchantriebsvorrichtungen, die den Pitch aller oder zumindest einer Mehrzahl von Blättern zentral einstellen. Der Erfindungsgegenstand kann sowohl in dezentral als auch in zentral angeordneten Pitchantriebsvorrichtungen umgesetzt werden.

Gattungsgemäße Pitchantriebsvorrichtungen nutzen zur Verstellung des Anstellwinkels in vielen Fällen Drehstrommotoren und benutzen hierzu Umrichtereinrichtungen, die im Prinzip aus einem Gleichrichter bestehen, der aus einer AC-Netzspannung eine DC-Gleichspannung für einen Gleichspannungszwischenkreis herstellt, wobei dieser Zwischenkreis einen Wechselrichter speist. Die Gleichrichtung kann ungesteuert oder gesteuert, beispielsweise mit einer Phasenanschnittssteuerung, erfolgen. Ebenfalls denkbar sind aktive Einspeiseeinheiten, die rückspeisefähig sein können. Die konkrete Ausgestaltung des Gleichrichters entspricht dem Stand der Technik, im Folgenden wird deshalb diese Einheit, die den Zwischenkreis versorgt, immer als Gleichrichter beschrieben. Der Wechselrichter dient dazu, die DC-Gleichspannung des Zwischenkreises in eine alternierende Drehspannung zur Bestromung des Drehstrommotors umzuwandeln. Die Wechselrichter arbeiten auf Basis leistungselektronischer Schalter, zum Beispiel mittels dreier Halbbrücken, die beispielsweise als MOSFET, IGBT-Transistoren oder IGCT-Transistoren ausgelegt sind. Diese erzeugen durch Pulsweitenmodulation eine veränderliche Spannung, wobei die Höhe der Ausgangsspannung sowie die Frequenz in weiten Grenzen geregelt werden können, um sowohl Asynchron- als auch Synchronmotoren anzutreiben. Hierdurch können beliebige Drehzahlen bzw. Drehmomente der Drehstrommotoren eingestellt werden. Die Motorstränge des Motors sind dabei in einer Stern- oder Dreiecksschaltung zumindest auf einer Kontaktseite miteinander verbunden.

Pitchantriebe werden in der Regel mit leistungsstarken, verschleißfreien und robusten Drehstromantrieben angetrieben. Diese weisen allerdings den Nachteil auf, dass bei Ausfall des AC-Netzes oder einer Störung der Umrichtereinrichtung der Pitchantrieb vollständig ausfällt, somit der Pitch nicht mehr verändert und die Kraftanlage nicht mehr gesteuert werden kann. Dies geschieht meist unter widrigen Umständen wie beispielsweise einem Unwetter, bei dem nicht selten ein Blitzschlag das AC-Netz oder die Motorelektronik zum erliegen bringt. Hierbei besteht die Gefahr, dass die Kraftanlage überlastet und dabei beschädigt oder zerstört wird.

Aus diesem Grund können derartige Kraftanlagen einen Notenergiespeicher umfassen, der auf Basis einer Hilfsenergiequelle, meist Batterie oder Akkumulator, eine Gleichstromversorgung bereitstellen kann. Hierbei ergibt sich wiederum das Problem, dass eine AC-Antriebsvorrichtung im Notbetrieb mit DC-Spannung versorgt wird. Dieses Problem wird dadurch gelöst, dass ein Drehstrom-Pitchantriebsmotor durch Einspeisung eines Gleichstroms in einen Zwischenkreis eines Wechselrichters betreibbar ist. Hierbei ergibt sich allerdings das Problem, dass bei einem Defekt der Wechselrichtereinheit der Pitchantrieb vollständig ausfällt und die Anlage nicht mehr gesteuert werden kann.

Die Erfindung betrifft einen Notbetrieb einer Pitchmotor-Antriebsschaltung, in der durch Redundanz der Wechselrichtereinheit eine erhöhte Ausfallsicherheit beim Betrieb des Drehstrommotors gewährleistet werden kann. Aus dem Stand der Technik sind hierzu verschiedenartige Konzepte bekannt, beispielsweise die redundante Auslegung des gesamten Antriebssystems, wobei zwei oder mehrere Umrichtereinrichtungen sowie zwei oder mehrere Drehstrommotoren eingesetzt werden. Daneben gibt es Antriebsschaltungen, bei denen ein einzelner Motor durch zwei parallel umschaltbare Umrichtereinrichtungen angesteuert werden kann. Hierdurch wird ein im Normalbetrieb redundant gehaltener Antriebszweig für einen Notbetrieb vorgehalten, wodurch Herstell- und Wartungsaufwand ohne Zusatznutzen für den Normalbetrieb erhöht sind.

Aus der DE 103 35 575 B4 geht eine notbetriebsfähige Pitchantriebsschaltung hervor, bei dem ein Energiespeicher mittels des Gleichrichters einer Umrichterschaltung aufladbar ist. Der Notbetrieb basiert auf einem störungsfreien Betrieb des einzigen Wechselrichters.

In der JP 63 245 265 A ist eine notbetriebsfähige Umrichtervorrichtung beschrieben, die im Nomalbetrieb als Dreiecksschaltung und in einem Notbetrieb als Sternschaltung geschaltet wird.

In gattungsfremd eingesetzten Antriebsvorrichtungen existieren Vorschläge für eine Motorantriebsschaltung für einen Drehstrommotor mit beidseitig zugänglichen Motorsträngen, d.h. einem Motor, bei dem die Motorstränge, d.h. einzelne miteinander verbundene Ständer- aber auch Läuferwicklungen, von zwei Kontaktseiten von außen zugänglich sind. Die Motorstränge einer ersten Kontaktseite werden mit einer ersten Umrichtereinrichtung und die der zweiten Kontaktseite mit einer zweiten Umrichtereinrichtung verbunden. Durch eine synchronisierte Ansteuerung der Wechselrichter, die in den Umrichtereinrichtungen umfasst sind, können höhere Motorleistungen durch diesen Doppelumrichterbetrieb erreicht werden. Solche Doppelumrichterschaltungen erzielen eine höhere Leistung aus der Tatsache, dass bei gleicher Zwischenkreisspannung eine höhere Spannung an den Drehstrommotor angelegt werden kann als bei einer konventionellen Umrichtereinrichtung; der Motor kann somit für eine vorgegebene Leistung mit höherer Bemessungsspannung aber kleinerem Bemessungsstrom ausgelegt werden. Die maximale augenblickliche Spannung, die einen Servoregler-Umrichter an einen in Sternschaltung konfigurierten Motor anlegen kann, ist die DC-Zwischenkrelsspannung. Bei einem konventionellen Umrichter wirkt diese Spannung als verkettete Spannung über zwei Motorstrange. Bei einem Doppelumrichter kann diese maximale Spannung als Strangspannung wirken, während gleichzeitig die Wicklungsstränge mit den gleichen Strömen beaufschlagt werden können und somit identische Drehmomente erreicht werden können. Die Erhöhung der Spannung um den Faktor $\sqrt{3}$ führt zu einer Erhöhung der Bemessungsdrehzahl und damit der Motorleistung. Alternativ kann bei einer angepassten Motorauswahl der Bemessungsstrom von vorneherein um den Faktor $\sqrt{3}$ abgesenkt werden.

Für einen Doppelumrichterbetrieb ist es erforderlich, dass die beiden Umrichter exakt synchron miteinander arbeiten. Eine solche Synchronisation kann beispielsweise durch eine Kommunikations-Steuerleitung hergestellt werden, die die Synchronisierung und die Einstellung wichtiger Parameter ermöglicht, Hierbei kann es vorteilhaft sein, dass die beiden Zwischenkreise der beiden Umrichtereinrichtungen, die die beiden Seiten der Motorstränge des Drehstrommotors bestromen, miteinander verbunden sind, um einen Energieaustausch zwischen den beiden Zwischenkreisen der Umrichtereinrichtungen zu ermöglichen.

Eine derartige Schaltung ist beispielsweise aus der WO 2010/034908 A2 bekannt. Diese weist zudem Y-Schaltelemente auf, die an beiden Motorstrangseiten einen Kurzschluss der Motorstränge bewirken können, so dass der Motor lediglich durch einen Motorstrang bestromt in Y-Schaltung betrieben werden kann. Die Y-Schaltelemente sind zwischen den Motorsträngen und den Wechselrichter geschaltet, und schließen sowohl die Motorstränge als auch die Halbbrücken der Wechselrichter kurz.

Aus der WO 2009/058357 A1 ist ein einseitig bestrombarer Drehstrommotor in Y-Schaltung bekannt, der durch zwei parallel schaltbare Wechselrichtereinheiten betrieben werden kann. Bei Defekt einer Wechselrichtereinheit kann auf die zweite, redundante Wechselrichtereinheit umgeschaltet werden.

Allerdings hat sich insbesondere bei sicherheitsrelevanten Antriebssystemen wie einem Pitchantrieb herausgestellt, dass Umrichtereinrichtungen insbesondere bei Überspannung, Blitzschlag oder Überlast deutlich stärker ausfallgefährdet als die elektromechanischen Antriebsmotoren sind. Solche sicherheitsrelevanten Anwendungen könnten neben einer Pitchantriebsschaltung einer Wind- oder Wasserkraftanlage, bei der der Ausfall der Pitchregelung zur Zerstörung der Energieanlage führen kann, beispielsweise Aufzugsantriebe, Torantriebe, Fahrzeugantriebe, Pumpen- oder Verdichterantriebe oder sonstige sicherheitsrelevante Antriebssysteme sein.

Daher ergibt sich aus dem Stand der Technik das Problem, eine Motorantriebsschaltung derart zu erweitern, dass sie selbst im Doppelumrichterbetrieb eine hohe Redundanz und Ausfallsicherheit aufweist, wobei bei Anordnung zweier Umrichtereinrichtungen ein erhöhtes Ausfallrisiko entsteht, und gleichzeitig die Vorteile einer Doppelrichterschaltung für ein sicherheitsrelevantes Antriebssystem ausgenutzt werden kann.

Die oben genannten Nachteile werden durch eine Schaltung nach dem unabhängigen Anspruch 1 und einem Verfahren zum Betrieb einer Pitchantriebsschaltung nach den unabhängigen Ansprüche gelöst.

OFFENBARUNG DER ERFINDUNG

Es wird eine notbetriebsfähige Pitchantriebsschaltung für eine Wind- oder Wasserkraftanlage vorgeschlagen, die zumindest eine Gleichrichtereinheit, zumindest einen DC-Zwischenkreis, zwei Wechselrichterelnhelten und einen Pitch-Drehstrommotor mit beidseitig kontaktierbaren Motorsträngen umfasst, wobei eine erste Kontaktseite der Motorstränge mit einer ersten Wechselrichtereinheit und eine zweite Kontaktseite der Motorstränge mit einer zweiten Wechselrichtereinheit verbunden ist. Zumindest ein Schaltelement ist mit zumindest einer Kontaktseite der Motorstränge verbunden, wobei In einem Normalbetrieb eines ersten Schaltzustands des Schaltelements die Motorstränge mittels beider Wechselrichtereinheiten bestrombar sind, und in einem Notbetrieb eines zweiten Schaltzustands des Schaltelements die Motorstränge mittels einer einzigen Wechselrichtereinheit bestrombar sind.

Erfindungsgemäß ist jede Wechselrichtereinheit über zumindest ein Entkopplungs-Schaltelement mit den Motorsträngen einer Kontaktseite schaltbar verbunden sein, so dass die Halbbrücken einer Wechselrichtereinheit Im Falle eines Notbetriebs von der Kontaktseite des Drehstrommotors abgetrennt werden können. So kann bei Ausfall einer Wechselrichtereinheit diese abgetrennt werden, so dass interne Kurzschlüsse der Wechselrichtereinheit einen Notbetrieb des Drehstrommotors nicht störend beeinflussen. Des Weiteren kann zum Schutz des Motors und auch der Leistungshalbleiterbauelemente der Wechselrichtereinheiten eine Abkopplung der unbestromten Kontaktseite des Motors von der inaktiven Wechselrichtereinheit ermöglicht werden, um weiteren Schaden zu vermeiden.

Des Weiteren ist erfindungsgemäß eine Umrichtereinrichtung, bevorzugt beide Umrichtereinrichtungen, mit einer Bremschoppereinheit verbunden. Bremschopper leiten überschüssige Energie aus den DC-Zwischenkreisen an einen Bremswiderstand, die hierdurch in Wärme umgewandelt wird. Diese Energie kann beispielsweise in einem generatorischen Betrieb oder Bremsbetrieb des Drehstrommotors erzeugt werden. Falls die Energie nicht in einem Bremswiderstand abgeleitet wird, würde stattdessen die Zwischenkreisspannung ansteigen und die Kondensatoren des Zwischenkreises könnten überlastet bzw. zerstört werden. Alternativ kann die auftretende generatorische Energie in das Stromnetz zurückgespeist werden, hierdurch können netzseitig angeordnete Wechselrichtereinheiten verwendet werden. Durch Anordnung von Bremschoppereinheiten an oder in jeder Umrichtereinrichtung können die Bremschoppereinheiten vorteilhaft abwechselnd aktiv geschaltet werden, so dass die auftretende Abfuhrenergie pro Bremschoppereinheit halbiert werden kann. Fällt eine der beiden Bremschoppereinheiten aus oder ist nicht bestückt, so kann die volle Bremsleistung auf die verfügbare Bremschoppereinheit abgeleitet werden. Hierdurch wird eine erhöhte Redundanz für einen Bremschopperbetrieb und somit ein verbesserter Schutz der Umrichtereinrichtungen erreicht.

Mit anderen Worten schlägt die Erfindung eine Doppelwechselrichterantriebsschaltung vor, bei der ein Pitch-Drehstrommotor, der beidseitig kontaktierbare Motorstränge, insbesondere drei Motorstränge, aber auch mehrere Motorstränge aufweisen kann, mittels zweier Wechselrichtereinheiten bestrombar ist. In der Verbindung zwischen jeder Wechselrichtereinheit und einer Kontaktseite der Motorstränge kann ein Entkopplungs-Schaltelement zur schaltbaren Verbindung bzw. im Fehlerfall zur Abkopplung angeordnet sein. An mindestens einer Kontaktseite, denkbar aber auch an beiden Kontaktseiten, ist zumindest ein Schaltelement, beispielsweise ein elektromechanisches Schützelement oder ein elektronisches Schaltelement angeordnet, das bei Ausfall einer Wechselrichtereinheit in eine zweite Schaltstellung umschalten kann, in der in einem Notbetrieb eine Bestromung durch die verbleibende aktive Wechselrichtereinheit möglich ist. Somit kann ein Normalbetrieb realisiert werden, in dem der Motor mittels beider Wechselrichtereinheiten bestromt werden kann, so dass eine um ca. 70 Prozent höhere Antriebsleistung des Motors erreicht werden kann. In einem solchen Fall können beispielsweise bei einem 400-Volt-Drehstromnetz Motoren eingesetzt werden, die in Sternschaltung für 690-Volt-Netze vorgesehen sind. Der Leistungsbereich kann so um den Faktor 1,73 erhöht werden. Dabei entstehen im Motorbetrieb geringere Stromrippel, d.h. ein geringeres Maß an THD-Oberwellen (Total Harmonic Distortions), so dass eine störende Netzrückwirkung verringert wird. Des Weiteren können induktivitätsärmere Motoren, z.B. HS-Motoren (High-Speed-Motoren) eingesetzt werden, um eine vergleichbare Antriebsleistung bzw. Drehmoment und Drehzahl zu erreichen. Da in sicherheitsrelevanten Antrieben der Einsatz von Doppelwechselrichtereinheiten zu einem erhöhtem Ausfallrisiko der Halbleiterbauteile führen kann, wird vorgeschlagen, zumindest ein Schaltelement in den Motorstrangleitungen derart anzuordnen, dass bei Ausfall zumindest einer Wechselrichtereinheit eine Bestromung des Drehstrommotors durch die verbleibende Wechselrichtereinheit möglich ist. Hierbei ist grundsätzlich denkbar, dass das Schaltelement die Motorstränge einer Kontaktseite kurzschließt, um eine Sternschaltung zu realisieren, oder korrespondierende Motorstränge beider Kontaktseiten derart miteinander verbindet, dass eine Dreiecksschaltung realisierbar wird. Als Motor kann ein standardmäßiger Drehstrommotor verwendet werden, bei dem alle sechs Wicklungsenden herausgeführt sind, wie es bei Asynchronmotoren typischerweise der Fall ist. Bei Synchronmotoren, insbesondere Permanentsynchronmotoren, ist der Zugang zu allen sechs Wicklungsenden in der Regel ohne großen Aufwand möglich.

Die Erfindung beschränkt sich auf Drehfeldmotoren, da eine Verbesserung der Redundanz bei Gleichstrommotoren durch Zuschaltung einer DC-Notenergiequelle geschaffen werden kann. Die notbetriebsfähige Motorantriebsschaltung verbindet die Vorteile eines Doppelwechselrichterbetriebs mit einer hohen Redundanz, d.h. Störsicherheit, so dass bei eine sicherheitsrelevanten Pitchantrieb zur Verstellung des Rotorblatts einer Wind- oder Wasserkraftanlage, aber auch bei einem Fahrzeugantrieb, eines Aufzug- oder Torantrieb, einem Pumpen- oder Verdichterantrieb eine hohe Ausfallsicherheit erreicht werden kann.

Gemäß einer vorteilhaften Weiterentwicklung kann im zweiten Schaltzustand des Schaltelements die Kontaktseite der Motorstränge zur Bildung einer Y-Schaltung (Sternschaltung) kurzgeschlossen sein, wobei bevorzugt alle Motorstränge auf jeder Kontaktseite mit jeweils einem Schaltelement verbindbar sind. Das Schaltelement schließt alle Kontakte der Motorstränge einer Kontaktseite kurz, so dass bei Bestromung der Motorstränge der gegenüberliegenden Kontaktseite ein Sternbetrieb des Motors möglich ist. Somit kann jede Wechselrichtereinheit eine Y-Bestromung des Motors durchführen. Im Rahmen einer Sternschaltung kann ein hohes Drehmoment erzeugt werden, wobei die Drehzahl limitiert ist. Insbesondere zur Erzeugung eines hohen Anlaufdrehmoments kann eine solche Sternschaltung insbesondere beim Hochfahren des Motors angewendet werden. Erst danach kann beispielsweise in den Normalbetrieb mit beiden aktiven Wechselrichtereinheiten umgeschaltet werden. Ist von Vornherein einer der beiden Wechselrichter vermehrt störungsanfällig, so kann dessen Kontaktseite zur Erhöhung der Redundanz mittels des Y-Schaltelements bei Ausfall kurzgeschlossen werden, so dass zumindest die betreffende Kontaktseite mittels eines Schaltelements kurzschließbar sein kann.

In der Regel sind die beiden Wechselrichtereinheiten identisch aufgebaut, so dass eine Ausfallwahrscheinlichkeit in beiden Wechselrichtersträngen gegeben ist. Aus diesem Grund können bevorzugt auf beiden Kontaktseiten des Drehstrommotors zwei Y-Schaltelemente angeordnet sein, die bei Ausfall einer Wechselrichtereinheit das Y-Schaltelement der entsprechenden Kontaktseite kurzschließen, um den Drehstrommotor in Sternschaltung durch die Wechselrichtereinheit der gegenüberliegenden Kontaktseite weiter zu bestromen. Somit kann ein Betrieb mit aufrechterhaltenem Drehmoment aber niedrigeren Drehzahlen fortgesetzt werden. Im Y-Notbetrieb ist ein volles Drehmoment bei reduzierter Maximaldrehzahl möglich.

In einer weiteren vorteilhaften Ausgestaltung der Erfindung können in einem zweiten Schaltzustand des Schaltelements die beiden Kontaktseiten der Motorstränge zur Bildung einer $\Delta$-Schaltung (Dreiecksschaltung) miteinander verbunden sein. Das Schaltelement kann jeweils um 120° versetzte Motorstränge der beiden Kontaktseiten im Notbetrieb kurzschließen, so dass eine Dreiecksschaltung der Motorstränge realisiert werden kann, wobei eine Bestromung von der einen sowie von der anderen Wechselrichtereinheitsseite möglich ist. In diesem Fall genügt ein einzelnes Schaltelement, um den Motor in eine notbetriebsfähige Schaltung zu integrieren, so dass ein beidseitiger Bestromungsbetrieb mittels einer Wechselrichtereinheit möglich ist. In allen Fällen muss allerdings verhindert werden, dass bei dem zweiten Schaltzustand des Schaltelements weiterhin beide Wechselrichtereinheiten aktiv arbeiten, da es ansonsten zu einem Kurzschluss der Wechselrichtereinheiten kommen kann. Im Rahmen einer Dreiecksschaltung der Motorstränge kann der Motor mit voller Drehzahl aber einem reduzierten Drehmoment betrieben werden. Somit kann je nach Anordnung in Sternschaltung oder Dreieckschaltung der Schaltelemente eine Sternschaltung bzw. Dreieckschaltung realisiert werden, um entweder ein hohes Drehmoment oder eine hohe Drehzahl im Notbetrieb gewährleisten zu können.

Gemäß einer vorteilhaften Weiterbildung kann zumindest ein, bevorzugt zwei, Y-Schaltelemente auf gegenüberliegenden Kontaktseiten zur Bildung einer Y-Schaltung und ein weiteres $\Delta$-Schaltelement zur Bildung einer $\Delta$-Schaltung in der zweiten Schaltstellung mit den Motorsträngen schaltbar verbunden sein. In diesem Fall sind an den beiden Kontaktseiten des Motors insbesondere drei Notbetrieb-Schaltelemente angeordnet, zwei Y-Schaltelemente, die für einen wechselseitigen Sternbetrieb mittels jeweils einer Wechselrichtereinheit ausgelegt sind, und ein $\Delta$-Schaltelement, das für einen Dreiecksbetrieb des Motors ausgebildet ist. Im Rahmen einer übergeordneten Steuerlogik kann beispielsweise beim Anfahren des Motors im Notbetrieb eine Sternschaltung aktiv sein, wobei nach Erreichen einer Nenndrehzahl in eine Dreieckschaltung umgeschaltet werden kann, um je nach Bedarf entweder ein hohes Anlaufdrehmoment oder eine hohe Nenndrehzahl zu erreichen. Somit können die Vorteile einer klassischen Sterndreiecksschaltung im Notbetrieb mit den vorteilhaften Eigenschaften eines Doppelwechselrichterbetriebs kombiniert werden.

Gemäß einer vorteilhaften Weiterbildung der Erfindung kann zumindest ein Schaltelement, insbesondere ein Y-Schaltelement, ein Halbleiterschaltelement sein, insbesondere ein Halbleiter-Sternpunkt-Schaltelement sein. Grundsätzlich können die Schaltelemente beliebig aufgebaut sein und beispielsweise als dreipolige oder mehrpolige elektromechanischer Schütze ausgelegt werden. Insbesondere können die Schaltelemente in der zweiten Schaltstellung des Notbetriebs die jeweils inaktive bzw. ausgefallene Wechselrichtereinheit von den Motorsträngen abtrennen und somit zumindest sechs Schaltkontakte aufweisen. Allerdings ergibt sich insbesondere im Falle eines Y-Schaltelements, das die Aufgabe hat, die Motorstränge einer Kontaktseite kurzzuschließen, aber auch für ein $\Delta$-Schaltelement oder ein Freischaltelement bzw. Entkopplungs-Schaltelement die Möglichkeit, dieses als wartungsfreies Halbleiter-Schaltelement auszuführen. So kann das Halbleiter-Schaltelement eine Brückengleichrichtereinheit umfassen, die die Ströme der einzelnen Motorstränge gleichrichten kann, und ein Thyristor-Schaltelement aufweisen, das durch Zünden des Thyristors die gleichgerichtete DC-Spannung zwischen den Motorsträngen einer Kontaktseite kurzschließt, und somit einen Kurzschluss der Motorstränge realisiert. Alternativ kann eine Kombination aus Brückengleichrichter und Transistor-Schaltelement, eine Antiparallelschaltung einer Dioden-Tranistor-Reihenschaltung oder ein Triac-Schaltelement oder vergleichbare Halbleiter-Schaltelemente eingesetzt werden. Durch Einsatz eines Halbleiter-Schaltelements kann eine mechanische Abnutzung des Schaltelements vermieden werden, sowie eine hohe mechanische Belastbarkeit, Schaltfunkenunterdrückung und eine hohe Lebensdauer bei geringer Wartung und Kosten gewährleistet werden.

Gemäß einer vorteilhaften Weitergestaltung kann jede Wechselrichtereinheit mit einer eigenen Gleichrichtereinheit mit DC-Zwischenkreis zur Bildung einer unabhängigen Umrichtereinrichtung verbunden sein, wobei bevorzugt die beiden DC-Zwischenkreise der beiden Umrichtereinrichtungen miteinander ebenfalls verbunden sind. Insbesondere kann in der Verbindung der DC-Zwischenkreise ein Schaltelement zur schaltbaren Verbindung bzw. im Fehlerfall zur Abkopplung angeordnet sein. Grundsätzlich genügt es, eine einzige Gleichrichtereinheit auszubilden, die einen DC-Zwischenkreis zur Verfügung stellt, an dem beide Wechselrichtereinheiten angeschlossen sind, um aus der DC-Zwischenkreisspannung eine phasenkommutierte PWM-Spannung zum Betrieb des Motors bereitzustellen. Standardmäßig werden auf dem Markt allerdings Umrichtereinrichtungen angeboten, in denen bereits eine Gleichrichtereinheit mit DC-Zwischenkreis und eine Wechselrichtereinheit integriert sind. Diese Weiterbildung schlägt nun vor, zwei handelsübliche Umrichtereinrichtungen zur Bestromung des Drehstrommotors heranzuziehen, wobei jede Umrichtereinrichtung über eine getrennte Gleichrichtereinheit mit DC-Zwischenkreis verfügt. Um einen Stromfluss über die beiden Wechselrichtereinheiten sicherzustellen, kann zumindest ein, bevorzugt beide Potentiale des DC-Zwischenkreises der beiden Umrichtereinrichtungen miteinander zumindest schaltbar verbunden sein, um zumindest im Normalbetrieb einen parallele Bereitstellung der DC-Zwischenkreisspannung zu ermöglichen, und um einen geschlossenen Stromkreis und eine erhöhte Ausfallsicherheit durch einen redundant ausgelegten DC-Zwischenkreis zu ermöglichen. So kann in einem Notbetriebsfall zunächst eine Brückengleichrichtereinheit abgeschaltet werden, so dass eine einzige Brückengleichrichtereinheit die beiden Wechselrichtereinheiten der beiden Umrichtereinrichtungen mit Spannung versorgen kann. Falls die hierzu notwendige Spannung nicht ausreichen sollte, oder eine Wechselrichtereinheit ausgefallen ist, kann durch Umschalten eines Schaltelements in den zweiten Schaltzustand ein Notbetrieb eingerichtet werden, indem beispielsweise mittels Stern- oder Dreiecksschaltung der Motor mit nur einer Umrichtereinrichtung bestromt wird. Durch Verwendung von standardmäßigen Umrichtereinrichtungen können die Kosten zur Realisierung der notbetriebsfähigen Motorschaltung stark herabgesetzt werden.

Anknüpfend an das vorherige Ausführungsbeispiel kann es durchaus vorteilhaft sein, die beiden Umrichtereinrichtungen zu Synchronisationszwecken mit einer Kommunikations-Steuerleitung zu verbinden. Durch die Kommunikations-Steuerleitung, die beispielsweise ein Feldbussystem überträgt, kann eine Umrichtereinrichtung als Master-Umrichtereinrichtung und eine zweite Umrichtereinrichtung als Slave-Umrichtereinrichtung geschaltet sein, die eine Taktung der Master-Umrichtereinrichtung zur Erzeugung synchroner PWM-Signale der Slave-Umrichtereinrichtung für einen phasenrichtigen Betrieb des Motors zur Verfügung stellt. Über die Kommunikations-Steuerleitung können beispielsweise PWM-Schaltdaten, Schaltfrequenz, -Schaltphasendaten für eine Schaltfrequenzsychronisation, Läuferdrehwinkel, Feldorientierte Regelparameter wie Feldausrichtung, Vektorregeldaten und Raumzeigerausrichtung von Läufer und/oder Statormagnetfeld, Phasen- und Frequenzinformationen etc. zwischen den Wechselrichtereinheiten bzw. deren Steuermitteln übertragen werden. Des Weiteren können die Versorgungsspannungen parametrisiert oder Bremswiderstands-Einschaltschwellen synchron eingestellt werden. Die Kommunikations-Steuerleitung kann digital als Feldbus ausgeführt sein, und beispielsweise bei Ausfall der Zwischenkreisspannung einer Umrichtereinrichtung oder sonstige Störungen zur Einleitung des Notbetriebsfalls anzeigen.

Des Weiteren kann mit den beiden Umrichtereinrichtungen eine Regelung der Nullstromkomponente durchgeführt werden. Ein Nullstrom liegt vor, wenn die Summe der drei Motorströme nicht Null ist. Diese Nullstromkomponente ist unerwünscht, da sie zu unerwünschten Verlusten im Motor und den Umrichtereinheiten führt und auch Drehmomentschwankungen verursachen kann. Die Ursache des Nullstroms liegt unter anderem in parasitären Unsymmetrien der beiden Wechselrichter, z.B. in unterschiedlichen Durchlassspannungen, unterschiedlichen Schaltzeiten der Halbleiter oder Messfehler der Stromsensoren, die sich über die Stromregelung auf die Istwerte auswirken. Zur Verringerung des Stromflusses und des Energieverbrauchs kann dieser Nullstrom minimiert werden, wobei ein entsprechendes Regelungsverfahren eingesetzt werden kann.

Alternativ oder auch additiv kann zumindest eine Umrichtereinrichtung, bevorzugt beide Umrichtereinrichtungen, zumindest einen Drehwinkel- /Drehgeschwindigkeit oder vergleichbaren Sensor umfassen, der einen Drehwinkef des Motorantriebsstrangs bestimmen kann. Auf Basis des Drehwinkelsensors kann beispielsweise die Feldorientierung eingestellt werden. Sind an beiden Umrichterelnrichtungen Drehwinkelsensoren angeschlossen, so können bei Ausfall des Drehwinkelsensors einer Umrichtereinrichtung die Daten des Drehwinkelsensors der zweiten Umrichtereinrichtung zur Steuerung der ersten Umrichtereinrichtung herangezogen werden, wobei die entsprechenden Sensordaten ebenfalls über die Kommunlkations-Steuerleitung ausgetauscht werden können. Hierdurch ergibt sich eine Erhöhung der Redundanz bei der Sensorbestimmung der Zustandsgrößen des Drehstrommotors.

Gemäß eines weiteren vorteilhaften Ausführungsbeispiels können die beiden Umrichtereinrichtungen über einen sekundärseitig doppelt ausgeführter Netztransformator an ein Versorgungsnetz angeschlossen werden, wobei die beiden Zwischenkreise elektrisch zumindest schaltbar miteinander verbunden sein können. So ermöglicht der Einsatz zweier Umrichtereinrichtungen die Versorgung der beiden Umrichtereinrichtungen mit zwei unabhängigen und elektrisch getrennten sekundärseitigen Transformatorspulensätze, so dass bei Ausfall eines Sekundärspulensystems zumindest ein Notbetrieb mit dem verbleibenden Sekundärspulensystem und einer Wechselrichtereinheit möglich ist. Der Trenntransformator kann beispielsweise eine Yyd, Dyd oder Dyz Spulenkonfiguration aufweisen, d.h. die Primärseite wird in einer ersten Dreiphasen-Schaltkonfiguration betrieben und an ein Versorgungsnetz angeschlossen, und die beiden Sekundärspule werden in einer zweiten und dritten insbesondere verschiedenen Schaltkonfiguration, Stern, Dreieck oder Zick-Zack betrieben. Wichtig ist nur, dass die beiden Sekundärwicklungen eine 30°-Phasenverschiebung aufweisen, wie es für eine B12-Gleichrichtung üblich ist. Dabei bietet es sich beispielsweise an, einen Yyd-Netztransformator heranzuziehen, der auf der Primärnetzseite sterngeschaltete Transformatorspulen und auf der Sekundärseite sterngeschaltete und dreiecksgeschaltete Transformatorspulen zur Versorgung der beiden Umrichtereinrichtungen umfasst. Mittels des Trenntransformators kann ein Ausfall einer Sekundärseitenspule redundant abgefangen werden. Daneben weist der sekundärseitig doppelt ausgeführter Trenntransformator eine geringere hochfrequente Signalstörungsrückwirkung auf das Netz auf und die niederfrequenten Stromoberwellen werden drastisch reduziert, wodurch der THD-Störsignalanteil (Total Harmonic Distortion) des Motorantriebs insbesondere in einem netzstörungssensitiven Umfeld herabgesetzt werden kann, da die Netzphasen verschoben zueinander sind und aufgrund der hohen Induktivitäten Oberwellen geglättet werden. Die Zwischenkreise der beiden Wechselrichtereinheiten müssen für einen Doppelumrichterbetrieb miteinander verbunden sein, um einen Stromfluss zwischen beiden Wechselrichtereinheiten zu ermöglichen. Im Fehlerfall kann diese Verbindung freigeschaltet werden, um Kurzschlußströme zu verhindern, hierzu kann ein Entkopplungs-Schaltelement zwischen den beiden Gleichspannungskreise angeordnet sein. Diese reduzierten Netzrückwirkungen sind insbesondere bei der Anwendung der Antriebsschaltung in elektrisch sensibler Umgebung.

Entsprechend eines weiteren vorteilhaften Ausführungsbeispiels kann eine Nullstrom-Regeleinheit mit beiden Wechselrichtereinheiten verbunden sein, um im Normalbetrieb einen Nullstrom durch die Motorstränge minimiert zu regeln. Die Nullstrom-Regeleinheit kann diese parasitären Unsymmetrien weitestgehend durch geeignete Ansteuerung der beiden Wechselrichtereinheiten kompensieren. Somit kann eine Nullstrom-Regeleinheit den Stromverbrauch und damit den Wirkungsgrad minimieren, sowie die Lebensdauer der Leistungshalbleiterbauelemente erhöhen.

Entsprechend einer vorteilhaften Ausgestaltung der Erfindung kann zumindest an einem DC-Zwischenkreis ein DC-Notenergiespeicher, insbesondere ein Akkumulator oder eine hochkapazitive Kondensatoranordnung, zumindest schaltbar und/oder mittelbar zur Spannungsversorgung des Zwischenkreises bei Ausfall der netzbasierten Gleichspannungsversorgung verbunden sein. So kann zumindest der DC-Zwischenkreis einer Wechselrichtereinheit mit einer DC-Notenergieversorgung zumindest schaltbar verbunden sein, um bei Ausfall der Netzversorgung oder bei Ausfall einer Brückengleichrichtereinheit einen gesteuerten Notbetrieb in Kombination mit der zweiten Schaltstellung des Schaltelements zu ermöglichen. Insbesondere können beide Zwischenkreise unabhängig und getrennt durch zwei oder mehrere Notenergie-Schaltelemente schaltbar durch den DC-Notenergiespeicher versorgt werden. In diesem Fall sollte, sofern eine galvanische Verbindung der beiden Zwischenkreise vorgesehen ist, mittels eines Entkopplungs-Schaltelements die Zwischenkreisverbindung freischaltbar sein, um im Notbetrieb sowohl einen Doppelumrichter- als auch einen Einfachumrichterbetrieb zu gewährleisten, wobei zumindest im Einfachumrichterbetrieb ein unerwünschter Stromfluss zwischen den beiden Zwischenkreisen verhindert werden kann. Auch kann der DC-Notenergiespeicher über einen Entkopplungshalbleiter, beispielsweise Entkopplungsdiode oder Entkopplungsdiac oder andere aktive Halbleiterschaltelemente an den Zwischenkreis in Kombination mit oder auch ohne Notenergie-Schaltelement angeschlossen sein, um einen gerichteten Stromfluss zu ermöglichen und eine unerwünschte Rückwirkung auf den Energiespeicher zu verhindern. Daneben ist eine Kombination aus Entkopplungshalbleiter und Entkopplungs-Schaltelement denkbar. Der Notenergiespeicher kann generatorische Energie aus dem Zwischenkreis aufnehmen und somit die Zwischenkreisspannung stabilisieren. Im Ergebnis kann bei Totalausfall des Netzes, der Brückengleichrichtereinheiten und/oder einer Wechselrichtereinheit ein Notbetrieb mittels des DC-Notenergiespeichers und zumindest einer einzigen Wechselrichtereinheit gewährleistet werden, um das Rotorblatt einer Windkraftanlage in eine Fahnenstellung zu verfahren.

Alternativ und auch additiv kann jede Umrichtereinrichturtg über ein Entkopplungs-Schaltelement von dem Versorgungsnetz schaltbar entkoppelt werden. Insbesondere kann die Gfeichrichtereinheit schaltbar mit dem Energlenetz oder dem Netztransformator verbunden sein, um im Notbetrieb eine Trennung herbeizuführen, so dass interne Kurzschlüsse der Halbleiterbauelemente der Umrichtereinrichtung, der Gleichrichtereinheit oder der Wechselrichtereinheit nicht zum Auslösen von Netzüberstromsicherungen und somit zum Totalausfall des Antriebssystems führen. Durch Einsatz von Entkopptungs-Schaltelermnten der Umrichtereinrichtung zur Motorseite und zur Netzseite, kann ein Höchstmaß an Flexibilität und Störsicherheit gegeben werden, wodurch eine Reparatur oder Austausch einer Umrichtereinrichtung im laufenden Betrieb ermöglicht werden kann.

In einem nebengeordneten Aspekt schlägt die Erfindung eine Wind- oder Wasserkraftanlage mit einer Pitchantriebsvorrichtung vor, die einen Drehstrommotor umfasst, der mit einer Antriebsschaltung gemäß eines vorbeschriebenen Ausführungsbeispiels bestromt werden kann. Somit schlägt dieser Aspekt eine Energieanlage mit Pitchantriebsstrang vor, bei dem eine der oben vorgeschlagenen Motorantriebsschaltungen zum Betrieb des Motors eingesetzt wird. Hierdurch können eine hohe Redundanz der Ansteuerelektronik, eine geringe Ausfallwahrscheinlichkeit und eine erhöhte Leistungsausbeute erreicht werden, wobei die Gefahr eines Ausfalls des Antriebs stark herabgesetzt werden kann.

Gemäß eines weiteren nebengeordneten Aspekts wird ein Verfahren zum Betrieb einer Pitchmotor-Antriebsschaltung vorgeschlagen, bei der in einem Normalbetrieb in einer ersten Schaltstellung des Schaltelements die Motorstränge des Drehstrommotors mittels beider Wechselrichtereinheiten bestromt werden. Tritt ein Notbetriebsfall auf, insbesondere ein Ausfall einer Wechselrichtereinheit oder einer Umrichtereinrichtung, wird das Schaltelement in eine zweite Schaltstellung geschaltet, wobei der Drehstrommotor mittels der verbleibenden Wechselrichtereinheit betreibbar ist. Das Betriebsverfahren weist einen Normalbetrieb auf, der einem an sich bekannten Doppelumrichterbetrieb entspricht und dessen Vorteile aufweist. Bei Ausfall einer Umrichtereinrichtung, beispielsweise bei Netzausfall des betroffenen Umrichterzweigs, bei Ausfall der Gleichrichtereinheit, der Wechselrichtereinheit oder des DC-Zwischenkreises, kann mittels des Schaltelements in einen Notbetrieb umgeschaltet werden, bei dem vorteilhafterweise die defekte Wechselrichtereinheit bzw. Umrichtereinrichtung abgekoppelt wird, und mit der verbleibenden intakten Wechselrichtereinheit bzw. Umrichtereinrichtung ein Notbetrieb durchführbar ist. Der Notbetrieb kann grundsätzlich eine Dreiecksschaltung oder eine Sternschaltung des Motors darstellen, wobei zwischen Stern- und Dreiecksschaltung beispielsweise in einer Anlaufphase umgeschaltet werden kann, so dass bei verminderter Drehzahl oder vermindertem Drehmoment ein Notbetrieb aufrechterhalten werden kann.

In einer vorteilhaften Ausführung des Verfahrens kann eine Umschaltung zwischen Normalbetrieb und Notbetrieb in Abhängigkeit eines Antriebsverlusts des Drehstrommotors, bei Ausfall oder Verringern der DC-Zwischenkreisspannung oder einer nicht-synchronisierten Wechselrichterausgangsspannung erfolgen. Zur Detektion eines Notbetriebsfalls kann eine indirekte Bestimmung der Antriebsleistung oder der Drehzahl des Drehstrommotors herangezogen werden, jedoch können daneben elektrische Größen, beispielsweise durch Überwachung der DC-Zwischenkreisspannung, der synchronisierten komplementären PWM-Spannungen der beiden Umrichtereinrichtungen oder Überwachung der Netzspannung betrachtet werden, wobei im Falle eines Abweichens von einem Sollwert ein Notbetriebsfall eingeleitet werden kann, und der Notbetrieb durch Abkoppeln einer Umrichtereinrichtung bzw. Umschalten des Schaltelements in die zweite Schaltstellung eingeleitet werden kann. Somit kann eine automatisierte Überwachung zwischen Normalbetrieb und Notbetrieb erreicht werden, wobei eine Störungsmeldung bei Umschalten in den Notbetrieb an eine übergeordnete Leitstelle abgesetzt werden kann.

Gemäß einer weiteren vorteilhaften Ausbildung des Verfahrens kann im Falle intakter Wechselrichtereinheiten oder Umrichtereinrichtungen ein alternierender Notbetrieb unter abwechselnder Verwendung der beiden Wechselrichtereinheiten bzw. Umrichtereinrichtungen über einen längeren Zeitraum erfolgen, insbesondere innerhalb vorbestimmbarer Zeitintervalle oder während vorbestimmbarer oder detektierbarer Antriebsphasen. Zur Antriebsleistungssteigerung kann bedarfsweise, insbesondere innerhalb bestimmter Antriebsphasen, auf einen Normalbetrieb umgeschaltet werden. Somit schlägt dieses Verfahren vor, in einem "Quasi-Normalbetrieb" eine alternierende Bestromung oder eine durchgängige Bestromung des Drehstrommotors mit nur einer einzigen Wechselrichtereinheit durchzuführen. Somit wird eine zweite Wechselrichtereinheit geschont bzw. durch ein Alternieren des Umschaltens der Bestromung über längere Zeitphasen hinweg beide Wechselrichtereinheiten gleichermaßen beansprucht, wodurch sich die Gesamtlebensdauer der Antriebsschaltung verdoppelt. Wird eine höhere Leistung gefordert oder eine höhere Drehzahl im Bedarfsfall oder in vorbestimmbaren Antriebsphasen notwendig, so kann in einen Doppelwechselrichterbetrieb, der zuvor als Normalbetrieb bezeichnet wurde, umgeschaltet werden, so dass ein Quasi-Normalbetrieb mit niedrigen Belastungen des Motors und ein Hochleistungsnormalbetrieb unter Verwendung der Doppelumrichterfunktion erreicht werden kann. Somit wird eine höchstmögliche Flexibilität, Redundanz und Sicherheit der Antriebsschaltung sowie eine bedarfsgerechte Antriebsleistungsbereitstellung ermöglicht.

ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    eine Umrichterantriebsschaltung des Stands der Technik;

Fig. 2    zwei Varianten redundant ausgestalteter Pitchantriebe des Stands der Technik;

Fig. 3    eine erste Ausführungsform einer erfindungsgemäßen Pitchantriebsschaltung;

Fig. 4    eine zweite Ausführungsform einer erfindungsgemäßen Pitchantriebsschaltung;

Fig. 5    ein weiteres Ausführungsbeispiel einer erfindungsgemäßen Pitchantriebsschaltung;

Fig. 6    ein Ausführungsbeispiel einer Pitchantriebsschaltung mit Halbleiterschaltelementen;

Fig. 7    Halbleiterschaltelemente für den Einsatz in einem Ausführungsbeispiel einer erfindungsgemäßen Pitchantriebsschaltung;

Fig. 8    eine transformatorgekoppelte Pitchantriebsschaltung eines Ausführungsbeispiels;

Fig. 9    eine Windenergieanlage mit notbetriebsfähigem Pitchantriebssystem unter Verwendung einer Ausführungsform einer Pitchantriebsschaltung.

In den Figuren sind gleiche oder gleichartige Komponenten mit gleichen Bezugszeichen beziffert.

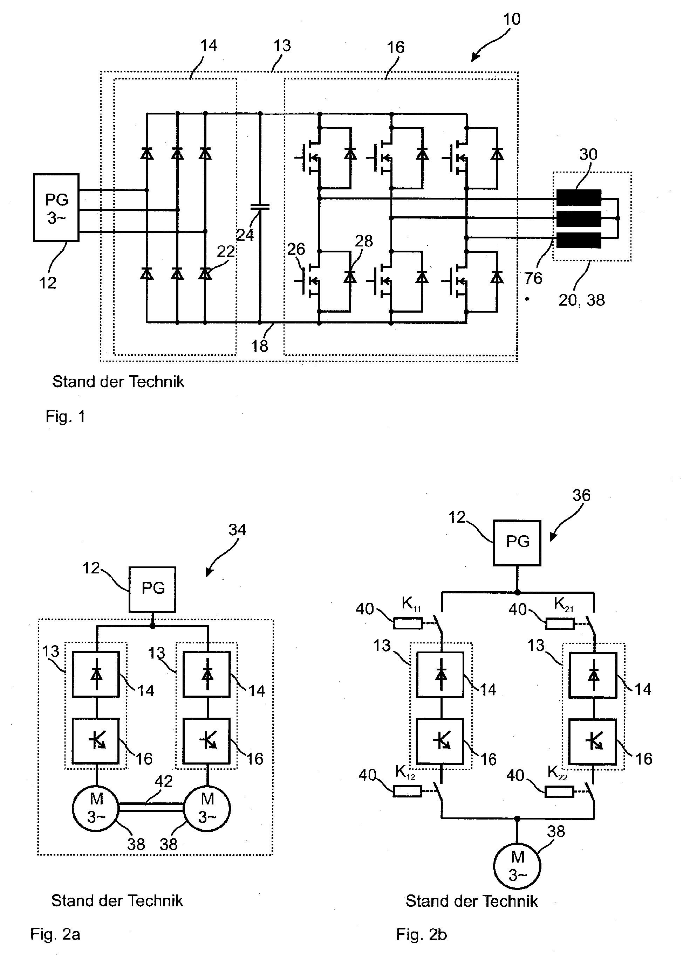

Die Fig. 1 zeigt eine Umrichtereinrichtung 10 des Stands der Technik zur Bestromung eines Pitchantrieb-Drehstrommotors 38, dessen Motorstränge 30 in Sternschaltung geschaltet sind. Die Umrichtereinrichtung 10 ist an ein Versorgungsnetz 12 (Power Grid) dreiphasig angeschlossen, wobei die drei Netzphasen mittels einer in der Umrichtereinrichtung 10 umfassten Gleichrichtereinheit 14 mittels Brückengleichrichterdioden 22 in eine Gleichspannung umgewandelt wird, die mittels eines DC-Zwischenkreises 18 eine Wechselrichtereinheit 16 mit Gleichspannung versorgt. Zur Stabilisierung der DC-Gleichspannung können eine oder mehrere Zwischenkreiskapazitäten 24 im Zwischenkreis 18 angeordnet sein, die eine DC-Energie speichern bzw. regenerative Energie des Motors aufnehmen können und die Oberwelligkeit der DC-Gleichspannung glätten. Die Wechselrichtereinheit 16 umfasst drei Leistungshalbleiterschaltbrücken, in denen jeweils zwei Leistungshalbleiterschaltelemente 26, beispielsweise IGBT, MOSFET oder IGCT-Transistoren zur Bildung einer PWM-modulierten Ausgangsspannung (Pulse Width Modulation) angeordnet sind. Die Leistungshalbleiterschaltelemente 26 speisen die DC-Brückengleichrichterspannung als PWM-Spannung in die Motorstränge des Drehstrommotors 20 ein. Als Freilauf sind den Wechselrichter-Schaltelementen 26 Dioden 28 parallel geschaltet, so dass eine erhöhte Lebensdauer und ein Schutz vor induktiven Spannungsspitzen erreicht werden kann. Eine Antriebssteuerlogik (nicht dargestellt) betätigt die sechs Wechselrichter-Schaltelemente 26 derart, dass eine gewünschte Nenndrehzahl bzw. ein gewünschtes Nenndrehmoment des Drehstrommotors 20 durch Kommutierung der Strangströme erreicht werden kann. Die Antriebssteuerung kann Strom-/Spannungssensoren und bzw. oder mechanische Drehzahl-, Drehwinkel- und Drehmomentsensoren zur Erzeugung bedarfsgerechter PWM-Signale umfassen, um ein gewünschtes Antriebsverhalten des Drehstrommotors 20 bereitzustellen. Der Drehstrommotor 20 in Y-Schaltung verfügt über eine einzelne Kontaktseite, an der die drei Motorstränge 30 einseitig von außen kontaktierbar sind. Der Ausfall des Versorgungsnetzes 12, der Brückengleichrichtereinheit 14, einem Kurzschluss der Zwischenkreiskapazität 24 des Zwischenkreises 18 oder einem Wechselrichter-Schaltelement 26 der Wechselrichtereinheit 16 führt zu einem Gesamtausfall des Antriebssystems. Da Drehstrommotoren 20 in der Regel robust ausgelegt sind, ist die Ausfallwahrscheinlichkeit der Antriebsschaltung wesentlich höher als ein mechanischer Ausfall des Motors. Insbesondere in sicherheitsrelevanten Antriebssträngen wird daher eine Redundanz vorgesehen, wie sie in den Figuren 2 beispielsweise dargestellt sind.

Fig. 2a zeigt ein vollständig redundant aufgebautes Motorantriebssystem 34, das zwei elektrisch getrennte Antriebseinheiten aufweist, wobei jede Antriebseinheit aus einem Drehstrommotor 38 und einer Umrichtereinrichtung 13 besteht. Die Umrichtereinrichtung 13 umfasst wiederum eine Gleichrichtereinheit 14 und eine Wechselrichtereinheit 16. Ausgehend vom Versorgungsnetz 12 sind die beiden Antriebseinheiten elektrisch parallel geschaltet, wobei die Motoren 38 über eine mechanische Kopplung 42 mechanisch miteinander verkoppelt sind und gemeinsam eine mechanische Last antreiben. Bei Ausfall einer Antriebseinheit kann die Antriebsaufgabe durch den verbleibenden zweiten Motorstrang mit 50% Antriebsleistung erfüllt werden. Die Kosten für eine solche Antriebsstrangredundanz sind doppelt so hoch wie die Kosten einer einzelnen Antriebseinheiten, so dass ein solches redundant ausgelegtes System nur in seltenen Fällen eingesetzt wird, bei dem eine hohe Verfügbarkeit gefordert wird.

Alternativ hierzu zeigt Fig. 2b ein weiteres redundantes Antriebssystem 36, in dem lediglich die Antriebsschaltung redundant ausgelegt ist, und die beiden Teilantriebsschaltungen an einen einzigen Drehstrommotor 38 angeschlossen ist. Jede Teilantriebsschaltung umfasst eine Umrichtereinrichtung 13, wobei die beiden Umrichtereinrichtungen 13 zwischen Versorgungsnetz 12 und Drehstrommotor 38 parallel geschaltet, und über jeweils zwei zugeordnete Schaltelemente 40 K11, K12 bzw. K21, K22 an das Versorgungsnetz 12 und den Drehstrommotor 38 ankoppelbar sind. Bei Ausfall einer Umrichtereinrichtung 13 kann diese vom Versorgungsnetz 12 und Drehstrommotor 38 abgekoppelt, und die zweite Umrichtereinrichtung 13 angekoppelt werden, um einen störungsfreien redundanten Betrieb zu ermöglichen. Hierbei sind die Kosten für das elektronische System verdoppelt, jedoch können die wesentlich teureren mechanischen Komponenten des Drehstrommotors 38 nur einfach ausgelegt werden, gegenüber den in Fig. 2a dargestellten vollständig redundanten Antriebssystemen. In beiden Fällen kann lediglich ein Antriebsverhalten wie in dem in Fig. 1 dargestellten Antriebssystem erreicht werden, so dass grundsätzlich nur ein einfacher Umrichterbetrieb ermöglicht wird, und eine Redundanz lediglich für einen Notbetrieb bereitgehalten wird.

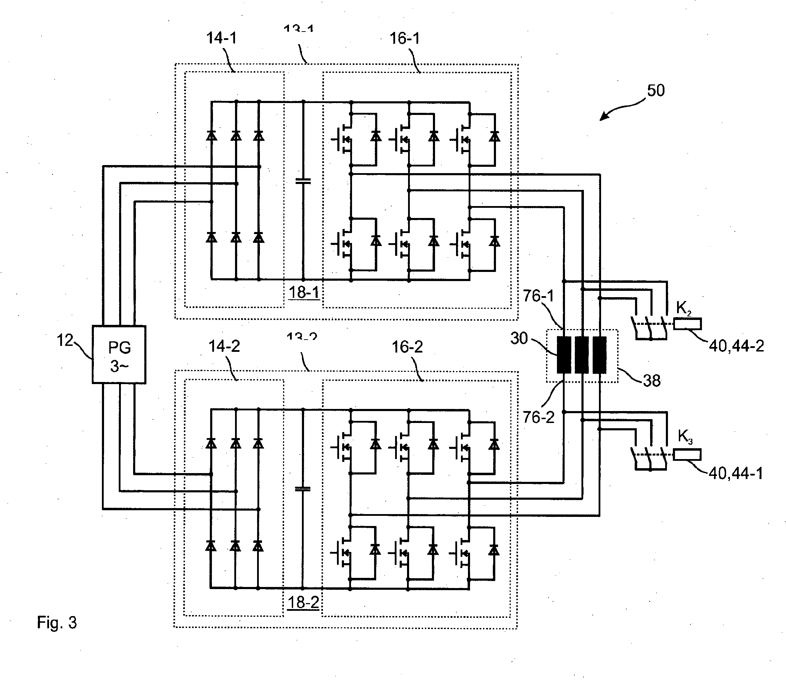

Fig. 3 zeigt ein erstes Ausführungsbeispiel einer erfindungsgemäßen Pitchantriebsschaltung 50. Die Antriebsschaltung 50 ist für einen Y-Notbetrieb ausgelegt, und basiert grundsätzlich auf einem Doppelumrichterbetrieb eines Drehstrommotors 38. Da der Motor 38 als robustes Bauteil betrachtet werden kann, weist er eine geringe Ausfallwahrscheinlichkeit auf, so dass auf die Redundanz des elektromechanischen Antriebs verzichtet werden kann. Die Umrichtereinrichtungen 13-1, 13-2 sind wesentlich empfindlicher für äußere Einflüsse, wie zum Beispiel Netzüberspannung und Blitzschläge, und werden daher als kritisch angesehen, wobei durch eine Doppelrichterantriebsschaltung eine Redundanz der elektrischen Bauteile gegeben ist. Die beiden Umrichtereinrichtungen 13-1 und 13-2 sind parallel an ein Drehstromversorgungsnetz 12 angeschlossen. Jede Umrichtereinrichtung 13 umfasst eine Gleichrichtereinheit 14, einen Zwischenkreis 18 mit Zwischenkreiskapazität 24 und eine Wechselrichtereinheit 16, die drei Wechselrichter-Schaltbrücken umfasst. Die Motorstränge 30 des Drehstrommotors 38 weisen zwei von außen zugängliche Kontaktseiten 76-1, 76-2 auf, wodurch jeder Motorstrang 30 beidseitig bestrombar ist. Jeder Motorstrang 30 wird an jeder Kontaktseite 76 mit der Halbbrücke einer Wechselrichtereinheit 16 verbunden. Somit ist eine Doppelumrichterfunktionalität gegeben, so dass ein Drehstrommotor 38 bei synchronisiertem Betrieb der beiden Umrichtereinrichtungen 13 mit erhöhter Bemessungsspannung im Vergleich zur Sternschaltung $\left(\sqrt{3}\right)$ eingesetzt werden kann, wodurch eine höhere Drehzahl erreichbar ist. Vorteilhafterweise können die beiden Umrichtereinrichtungen 13 miteinander synchronisiert werden, um eine abgestimmte PWM-Modulation zu erreichen, wobei ebenfalls vorteilhaft die Zwischenkreise elektrisch zumindest schaltbar verbunden sind, um beispielsweise bei Ankopplung der Gesamtschaltung über einen Transformator an das Netz einen geschlossenen Stromfluss zu gewährleisten. Durch den Einsatz zweier Umrichtereinrichtungen 13 ist das Risiko eines Ausfalls einer Umrichtereinrichtung 13 höher als beim Betrieb mit einer einzigen Umrichtereinrichtung 13, die in Fig. 1 dargestellt ist. Um eine Redundanz zu schaffen und eine erhöhte Betriebssicherheit auch im Doppelrichterbetrieb zu gewährleisten, sind an einer ersten Kontaktseite 76-1 ein γ-Schaltelement 44 K2 angeordnet, das bei Ausfall der Umrichtereinrichtung 1,3-1 in eine geschlossene Schaltstellung überführt werden kann, so dass ein Sternschluss der Motorstränge 30 auf der ersten Kontaktseite 76-1 erfolgt, und eine Sternschaltungsbetrieb des Motors 38 mittels der Umrichtereinrichtung 13-2 gewährleistet werden kann. Äquivalent hierzu ist auf der zweiten Kontaktseite 76-2 ein weiteres Y-Schaltelement 44-1 angeordnet, das bei Ausfall der Umrichtereinrichtung 13-2 in eine zweiten Schaltstellung geschaltet werden kann, und somit mittels der Umrichtereinrichtung 13-1 der Motor 38 in Sternschaltung im Notbetrieb betrieben werden kann. Somit wird eine Doppelumrichterschaltung für einen Normalbetrieb vorgeschlagen, in dem die beiden Schaltelemente 44-1 und 44-2 sich im Ruhezustand befinden, und bei Ausfall einer Umrichtereinrichtung 13-1 oder 13-2 eine Sternschaltung für einen Notbetrieb realisiert werden kann, so dass die verbleibende Umrichtereinrichtung 13 den Motor 38 weiter antreiben kann.

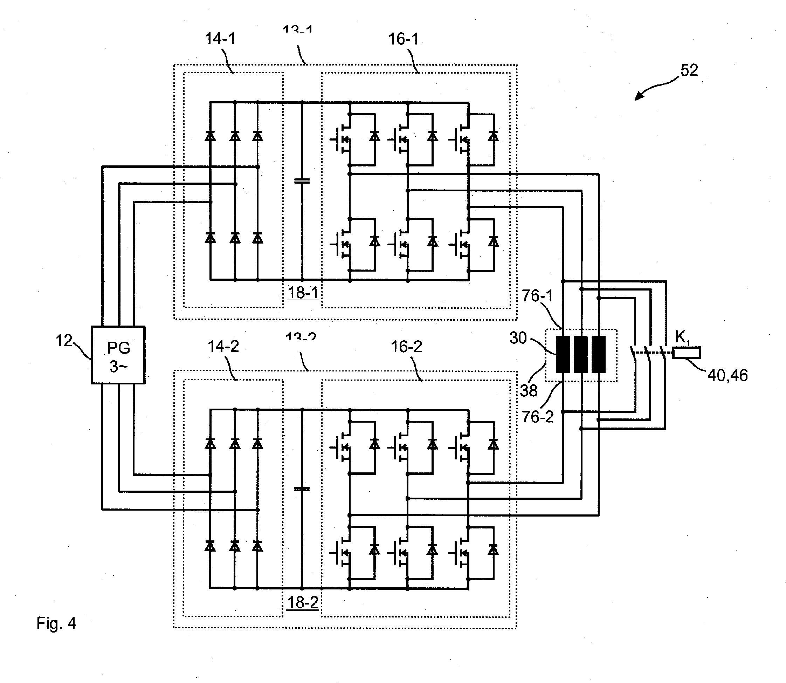

Fig. 4 zeigt diesbezüglich eine äquivalente Schaltung wie Fig. 3, allerdings ist hier ein einziges Schaltelement 40 als Δ-Schaltelement 46 realisiert, das die Motorstränge einer ersten Kontaktseite 76-1 mit den Motorsträngen einer zweiten Kontaktseite 76-2 derart verbindet, dass in der zweiten Schaltstellung eine Dreiecksschaltung für den Notbetrieb bereitgestellt wird. So wird z.B. im Notbetrieb der U-Motorstrang der ersten Kontaktseite 76-1 mit dem V-Strang der zweiten Kontaktseite 76-2 verbunden, der V-Strang der ersten Kontaktseite mit dem W-Strang der zweiten Kontaktseite und der W-Strang der ersten Kontaktseite mit dem U-Strang der zweiten Kontaktseite verbunden. Hierdurch ergibt sich zum einen der Vorteil einer Dreieckschaltung, bei der eine hohe Nenndrehzahl erreicht werden kann, zum anderen kann unabhängig davon, ob Umrichtereinrichtung 13-1 oder 13-2 ausfällt, durch Schließen des Δ-Schaltelements 46 ein störungsfreier Dreiecksbetrieb des Motors 38 realisiert werden. Im Vergleich zur Fig. 3 wird im Notbetrieb statt einer Sternschaltung eine Dreieckschaltung realisiert. Eine entsprechende Logik, die aufgrund des Ausfalls einer Umrichtereinrichtung 13 das jeweils gegenüber der weiterhin aktiven Umrichtereinrichtung 13 zugeordnete γ-Schaltelement 44 für eine Sternschaltung aktivieren kann, ist somit nicht notwendig. Es muss lediglich festgestellt werden, dass eine Umrichtereinrichtung 13 ausgefallen ist, so dass die zweite Schaltstellung des Leistungsschaltelements 46 eingenommen wird, und ein Notbetrieb erfolgt.

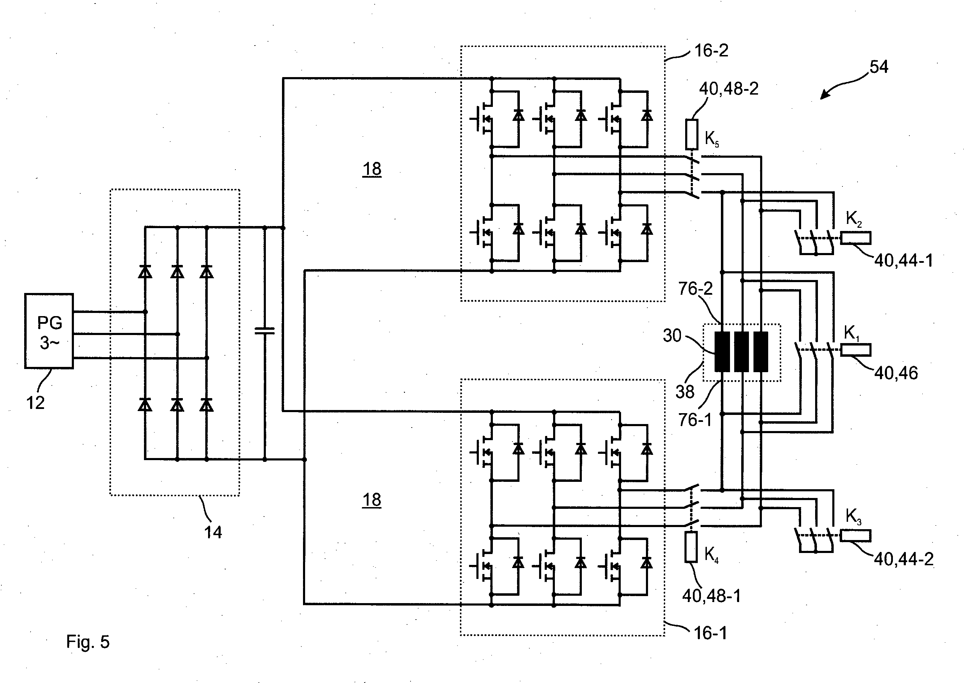

Schließlich zeigt Fig. 5 eine Kombination der in Fig. 3 und Fig. 4 dargestellten Notbetriebsschaltungen, so dass zum einen ein Δ-Schaltelement 46, zum anderen zwei γ-Schaltelemente 74-1 und 74-2 an den entsprechenden Kontaktseiten 76-1 und 76-2 der Motorstränge 30 angeordnet sind. Des Weiteren sind die Motorstränge 38 mit den Wechselrichtereinheiten 16-1 und 16-2 durch Entkopplungsschaltelemente 48 schaltbar verbunden, so dass im Fehlerfall einer Wechselrichtereinheit 16-1 bzw. 16-2 die defekte Wechselrichtereinheit von den Motorsträngen des Motors 38 elektrisch entgekoppelt werden kann. In diesem Ausführungsbeispiel 54 wird die AC-Spannung des Versorgungsnetzes 12 über eine einzige Gleichrichtereinheit 14 in eine Gleichspannung eines Zwischenkreises 18 umgewandelt, wobei die DC-Spannung des Zwischenkreises 18 beiden Wechselrichtereinheiten 16-1 und 16-2 gemeinsam zur Verfügung gestellt wird. Somit wird lediglich eine Redundanz der Wechselrichtereinheiten 16, jedoch nicht der Brückengleichrichtereinheit 14 bereitgestellt. Gegenüber dem in Fig. 3 und Fig. 4 dargestellten Ausführungsbeispiel kann die Anzahl der Halbleiterbauelemente reduziert und Kosten gespart werden. Ein Doppelumrichterbetrieb ist möglich, und im Notbetrieb kann zwischen einer Sternschaltung, bei der ein maximal hohes Anlaufdrehmoment erreicht werden kann, und einer Dreieckschaltung, bei der eine hohe Nenndrehzahl erreicht werden kann, umgeschaltet werden.

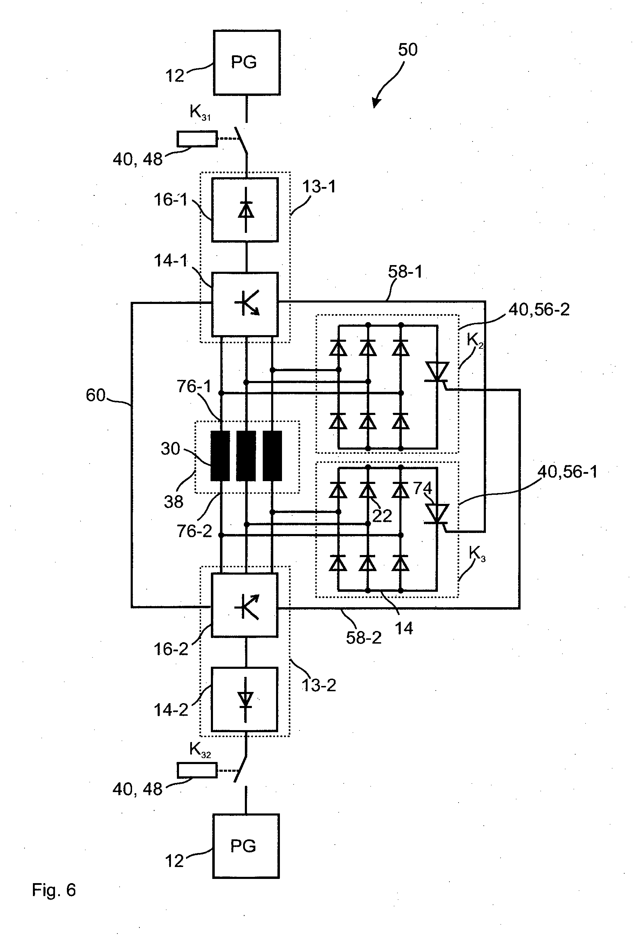

Fig. 6 zeigt schematisch ebenfalls ein Ausführungsbeispiel einer Antriebsschaltung, bei der zwei unabhängig verfügbare Netzzugänge 12 schaltbar über Entkopplungsschaltelemente 40 K31 und K32 jeweils an eine Umrichtereinrichtung 13-1 bzw. 13-2 zur AC-Spannungsversorgung angekoppelt sind. Die Umrichtereinrichtungen 13 bestromen im Normalbetrieb die Motorstränge 30 des Drehstrommotors 38 in einem Doppelrichterbetrieb. Zur Realisierung einer Sternschaltung für den Notbetrieb werden Halbleiter-Schaltelemente 56-1 und 56-2 eingesetzt. Diese Halbleiter-Sternpunkt-Schaltelemente umfassen eine Gleichrichtereinheit 14, die die Strangspannungen der drei kurzzuschließenden Motorstränge 30 gleichrichten, und ein Thyristor-Schaltelement 74, das die gleichgerichteten Spannungen kurzschließen kann. Die Schaltzeit eines Halbleiterschaltelements 56 ist wesentlich kürzer als die eines elektromechanischen Schaltelements, beispielsweise eines Schützes, so dass in höherer Geschwindigkeit und zuverlässig in den Notbetrieb umgeschaltet werden kann, beispielsweise im unterbrechungsfreien Betrieb. Des Weiteren sind Halbleiterschaltbauelemente 22, 74 praktisch wartungsfrei und in der Massenherstellung günstiger als Schütze. Zur Synchronisation der Umrichtereinrichtungen 13-1 und 13-2 ist eine Kommunikations-Steuerleitung 60 vorgesehen, die auf digitaler Basis basierend und ein Feldbussystem nutzend, parametrierte Prozessdaten zwischen den beiden Umrichtereinrichtungen, die beispielsweise als Master und Slave dienen können, austauscht. Der Master gibt dabei die PWM-Modulationsfrequenz und die Taktung vor, während der Slave komplementär hierzu PWM-Signale generiert. Fehlermeldungen können über die Kommunikations-Steuerleitung zwischen den beiden Umrichtereinrichtungen 13 ausgetauscht werden. Des Weiteren kann eine Nullstromregelung durchgeführt werden, bei der die entsprechenden Daten zur Minimierung des Nullstroms durch die Kommunikations-Steuerleitung übertragen werden können. Beim Ausfall einer Umrichtereinrichtung 13 kann die verbleibende Umrichtereinrichtung 13 das auf der gegenüberliegenden Kontaktseite 76 angeordnete Halbleiter-Sternpunkt-Schaltelement 56 mittels einer Notbetrieb-Steuerleitung 58 aktivieren, so dass der entsprechende Sternpunkt durch das Thyristor-Schaltelement 74 kurzgeschlossen werden kann. Die Antriebsschaltung arbeitet ohne elektromechanische Komponenten und ist somit besonders langlebig. Sie kann im laufenden Betrieb ein Umschalten zwischen Doppelumrichter-Normalbetrieb und Sternschaltungs-Notbetrieb realisieren.

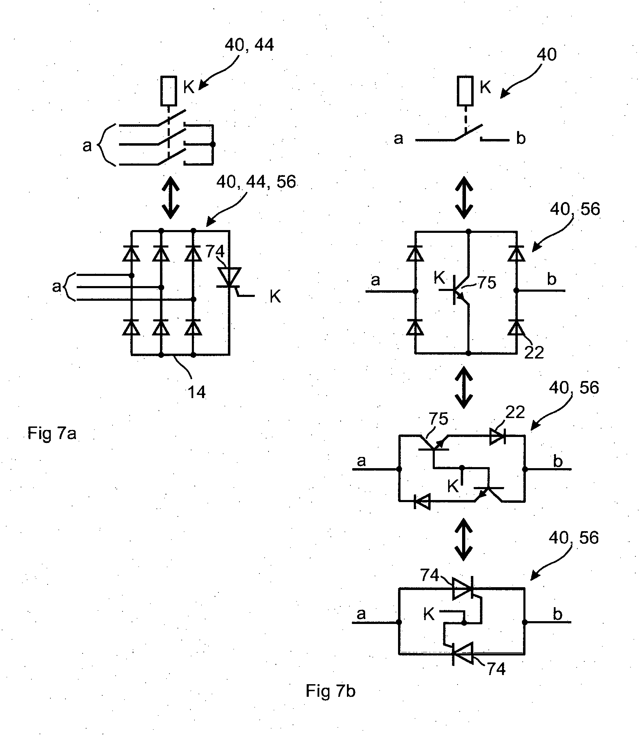

Die Fig. 7 zeigt mehrere Ausführungsbeispiele von Halbleiterschaltelemente 56, die innerhalb einer Antriebsschaltung 50, 52 oder 54 eingesetzt werden können: Fig. 7a zeigt zum einen ein Y-Schaltelement 44, dass einen elektromechanischen Schütz umfasst, um die drei Phasenstränge 30 einer Kontaktseite 76 schaltbar kurz zu schließen. Darunter ist die bereits in Fig. 6 diskutierte Halbleiter-Bauelementeschaltung 56 dargestellt, die eine Brückengleichrichteinheit 14 umfasst, wobei die Gleichspannungspfade mittels eines schaltbaren Thyristor-Schaltelements 74 kurzgeschlossen werden können. Somit kann ein langlebiges wartungsfreies Y-Schaltelement 44 geschaffen werden.

Die Fig. 7b zeigt weitere alternative Ausführungen von bidirektional schaltenden Halbleiter-Schaltelementen 56, die für einen einpoligen Betrieb ausgelegt sind, wobei für einen Dreiphasenbetrieb jeweils drei dieser Schaltelemente 56 parallel eingesetzt werden können. Konventionell besteht ein Schaltelement 40 aus einen elektromechanischen Schaltschütz, der einen oder mehrere Schaltkontakte umfasst, um eine schaltbare Verbindung zwischen den Kontaktstellen a und b herzustellen. Alternativ kann ein Halbleiterschaltelement 56 einen Brückengleichrichter mit vier Dioden 22 sowie ein Transistor-Schaltelement 75 umfassen, wobei das Transistor-Schaltelement 75 analog zu dem in Fig. 2a dargestellten Schaltelement 56 eine Verbindung zwischen den beiden Gleichspannungspfaden herstellen kann, um einen schaltbaren Wechselstromfluss durch die Brückengleichrichteranordnung zu ermöglichen. Daneben können in einer weiteren alternativen Ausführungsform zwei antiparallel geschaltete Dioden 22 jeweils in Reihe mit einem Transistor-Schaltelement 75 geschaltet sein, um ein Wechselspannungs-Halbleiter-Schaltelement 56 zwischen den beiden Kontaktseiten a und b zu bilden. Schließlich ist eine Antiparallelschaltung zweier Thyristor-Schaltelemente 75 zur Realisierung eines Halbleiter-Schaltelements 56 denkbar, dies entspricht der Grundschaltung eines Triacs. Darüber hinaus können weitere denkbare Kombinationen für ein bidirektionales Halbleiter-Schaltelement 56 denkbar sein, um ein schnelles, wartungsfreies Schaltverhalten unter mechanisch schwierigen Bedingungen in einer Energieanlage zu erreichen, in der hohe Beschleunigungskräfte auftreten können. Es treten keine Schaltfunken auf, wodurch sich die Halbleiter-Schaltelemente 56 in Ex-geschützten Bereichen eignen.

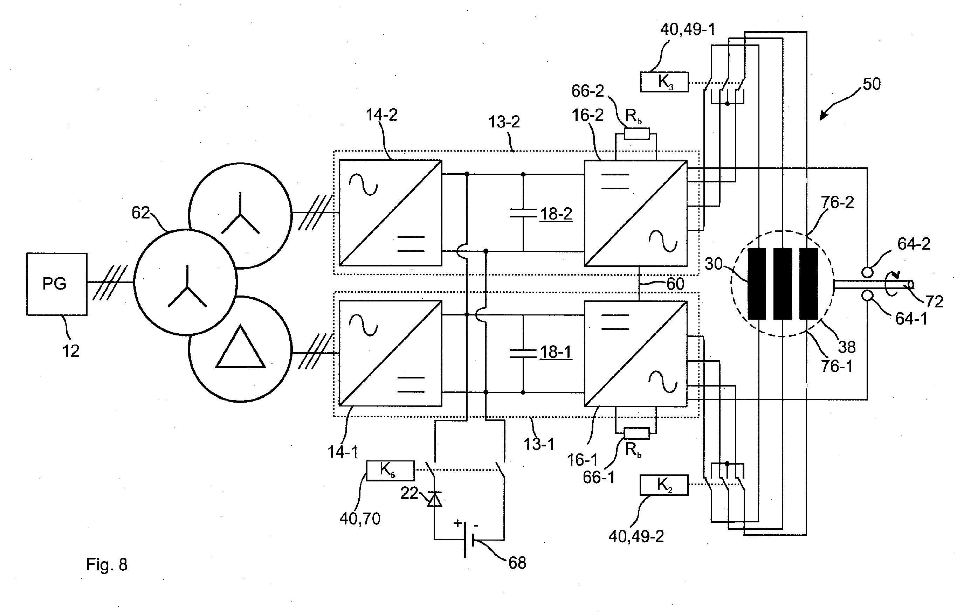

Fig. 8 zeigt ein weiteres Ausführungsbeispiel einer Antriebsschaltung 50 für die drei Motorstrangwicklungen 30 eines Drehstrommotors 38 eines Pitchantriebs. Das Versorgungsnetz 12 ist über einen Yyd-Trenntransformator 62 an zwei Umrichtereinrichtungen 13-1 und 13-2 angeschlossen. Aufgrund des Yyd-Transformators kann eine 12P-Gleichrichtung erfolgen, bei der Oberwellen mit der 5ten und 7ten Harmonischen der Netzfrequenz nicht auftreten, und somit geringere THD-Störungen (Total Harmonic Distortion) an das Netz abgegeben werden.

Die Zwischenkreise 18-1 und 18-2 der beiden Umrichtereinrichtungen 13-1 und 13-2 sind elektrisch miteinander verbunden, wobei ein DC-Notenergiespeicher 68 beispielsweise eine hochkapazitive Batterie bzw. ein Akku- oder eine Kondensatoranordnung schaltbar über ein Notenergie-Schaltelement 70 und eine Entkopplungsdiode 22 die Zwischenkreise 18 mit Energie versorgen kann, um bei Ausfall beispielsweise des Netztransformators 62 oder des Versorgungsnetzes 12 einen Doppelumrichterbetrieb bzw. Notbetrieb des Motors 38 zumindest für eine kurze Zeit zu gewährleisten. Der Notenergiespeicher 68 kann generatorische Energie des Motors 38 aufnehmen oder mittels der Zwischenkreisspannung aufgeladen werden, sofern ein rückwärtiger Stromfluss von Zwischenkreis zum Notenergiespeicher 68 möglich ist, dies kann beispielsweise über eine aktive Entkopplungs- bzw. Aufladeschaltung und/oder über das Entkopplungs-Halbleiterbauelement erreicht werden.

Die Ankopplung des Notenergiespeichers 68 an die Zwischenkreise 18-1, 18-2 kann auch auf ein Notenergieschaltelement 70 verzichten und dauerhaft mittels Entkopplungs-Halbleiter, beispielsweise einer oder mehreren Entkopplungsdioden 22 oder Entkopplungsdiacs realisiert werden. Des weiteren ist denkbar, die beiden Zwischenkreise 18-1, 18-2 getrennt und unabhängig voneinander mittels zweier Notenergieschaltelemente 70 durch den Notenergiespeicher 68 versorgbar zu machen, in diesem Fall ist es vorteilhaft ein weiteres Entkopplungs-Schaltelement 48 in die Verbindung der beiden Zwischenkreise 18-1, 18-2 vorzusehen.

Die Wechselrichtereinheiten 16-1 und 16-2 können die beiden Motorstränge 30 im Doppelumrichterbetrieb bestromen, wobei bei Ausfall einer Umrichtereinrichtung ein Notbetrieb in Sternschaltung mittels der verbleibenden Umrichtereinrichtung 13 durch Umschaltung eines Y-Umschaltelements 40, 49 ermöglicht ist. Die Y-Schaltelemente 49 sind als dreipolige bzw. sechspolige Schaltelemente ausgeführt, wobei durch die Umschaltung eine Entkopplung von der fehlerhaften Wechselrichtereinheit 16 und gleichzeitig ein Sternschluss der Motorstränge 30 erreicht wird. Somit können separate Entkopplungs-Schaltelemente 48 eingespart werden, und eine Ruhestellung des Y-Umschaltelements 49 beispielsweise eine Sternschaltung bewirken, so dass eine erhöhte Sicherheit durch Entkopplung der Motorstränge 30 im Ruhezustand oder im Fall eines Defekts geschaffen ist. Die beiden Wechselrichtereinheiten 16-1 und 16-2 sind mit Bremschoppereinheiten 66 ausgestattet, die regenerative Energie (generatorische Energie) des Motors 38 aufnehmen können, um den Zwischenkreis 18 nicht zu überlasten. Die beiden Bremschoppereinheiten 16-1 und 16-2 können alternierend geschaltet sein, um eine höhere Leistung aufzunehmen und bei Ausfall einer Bremschoppereinheit 16 kann ein Bremschopperbetrieb weiterhin durch die verbleibende Bremschoppereinheit 16 aufrechterhalten werden. Jede Umrichtereinrichtung 13-1 und 13-2 umfasst zumindest einen mechanischen Drehwinkelsensor 64-1 und 64-2, der an dem Antriebsstrang 72 des Motors 38 angeordnet ist, um zur phasenrichtigen PWM-Schaltung den Motordrehwinkel zu erfassen. Eine der beiden Umrichtereinrichtungen 13-1, 13-2 arbeitet als Master und kann über eine Kommunikations-Steuerleitung einen synchronisierten Doppelumrichterbetrieb mit der jeweils anderen Umrichtereinrichtung 13 als Slave koordinieren.

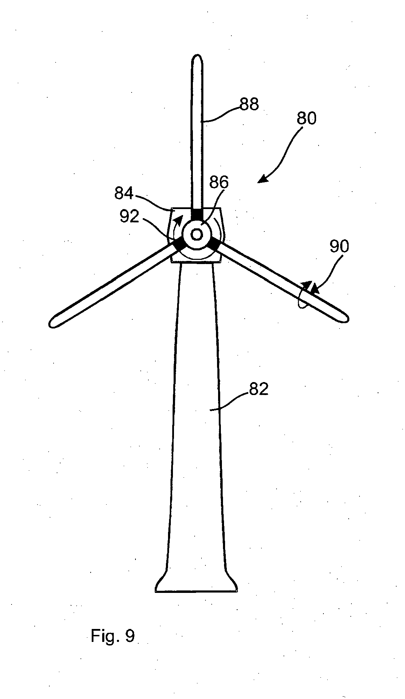

Schließlich zeigt Fig. 9 eine Windenergieanlage 80, bei der eine Gondel 84 auf einem Mast 82 angeordnet ist, und in der Gondel 84 eine Rotorachse 86 drehbar gelagert ist, an deren Längsende drei Rotorblätter 88 radial angeordnet sind. Zur Steuerung der Drehzahl und Energieaufnahme der Windenergieanlage 80 kann der Anstellwinkel (Pitch) 90 der Rotorblätter 88 mittels einer Pitchantriebsvorrichtung 92 gesteuert werden. Hierzu ist an jeder Wurzel eines Rotorblatts 88 eine Pitchantriebsvorrichtung 92 angeordnet, die einen Drehstrommotor zur Verstellung des Anstellwinkels umfasst. In dem vorgenannten Ausführungsbeispielen dargestellte Pitchantriebsmotoren ermöglichen die Steuerung des Anstellwinkels gegenüber dem anströmenden Wind, wobei der Doppelumrichterbetrieb eine hohe Leistungsfähigkeit des Motors 38 und somit eine Pitchverstellung auch bei großen Windlasten und unter hohen Geschwindigkeiten bereitstellt, und bei Ausfall einer Umrichtereinrichtung 13 die Notbetriebsfähigkeit in der zweiten Schaltstellung eine Notfahrt beispielsweise in die Fahnenstellung weiterhin ermöglicht ist. Somit wird eine Pitchantriebsvorrichtung 92 vorgeschlagen, die einen hohen Wirkungsgrad und eine große Antriebsleistung erreicht, wobei im Havariefall einen Notbetrieb ermöglicht wird, bei dem ein Motorbetrieb sowohl in Stern- als auch in Dreiecksschaltung unter einer hohen Drehzahl bzw. einem hohen Drehmoment gewährleistet wird.

Die erfindungsgemäße Antriebsschaltung geht zurück auf eine Doppelumrichterschaltung, die um zumindest ein Schaltelement erweitert ist, um im Notbetrieb eine Stern- oder Dreieckschaltung mit einer einzigen verbleibenden Umrichtereinrichtung zu ermöglichen. Dabei kann sowohl eine Sternschaltung im Notbetrieb aufrechterhalten werden, bei der ein volles Drehmoment bei reduzierter Maximaldrehzahl möglich ist, als auch eine Dreieckschaltung, die eine Maximaldrehzahl bei reduziertem Drehmoment ermöglicht. Für die Dreieckschaltung ist lediglich ein einziges Schaltelement für den Notbetrieb notwendig. Als Drehstrommotor kann ein Standardmotor verwendet werden, bei dem alle sechs Motorstrangenden herausgeführt sind, wobei dies bei Asynchronmotoren einen Standard darstellt und bei Synchronmaschinen grundsätzlich möglich ist. Da zwei Umrichtereinrichtungen verwendet werden, können deren Drehgeber oder Drehgeberauswertungen für Redundanzzwecke genutzt werden. Eine alternative Speisung des Zwischenkreises über einen Notenergiespeicher ist möglich. Die Zwischenkreise der beiden Umrichtereinrichtungen können miteinander gekoppelt sein, um selbst bei Ausfall einer Gleichrichtereinheit einen Doppelumrichterbetrieb weiterhin zu ermöglichen. Statt im Doppelumrichternormalbetrieb kann im Notbetrieb alternierend für eine gewisse Zeitspanne eine Umrichtereinrichtung und für eine andere Zeitspanne eine zweite Umrichtereinrichtung in Stern- oder Dreieckschaltung den Motor betreiben, wodurch die Lebensdauer der Antriebsschaltung verlängert ist. In bestimmten Phasen, in denen hohe Leistungen zur Verfügung gestellt werden müssen, kann in den Doppelumrichterbetrieb umgeschaltet werden. Dies ist insbesondere bei Windkraftanlagen von Vorteil, da im normalen Pitchbetrieb typischerweise keine hohen Drehzahlen und Drehleistungen notwendig sind, so dass tage- oder wochenweise die Umrichtereinrichtungen alternierend betrieben werden können. Durch eine Datenkommunikation der beiden Umrichtereinrichtungen kann eine Minimierungsregelung der Nullstromanteile ermöglicht werden. Werden sowohl Schaltelemente für die Stern- als auch für die Dreiecksschaltung vorgesehen, so kann im Notbetrieb zwischen diesen beiden Grundschaltungsarten umgeschaltet werden. Es genügt selbst in einer Notbetriebs-Sternschaltung ein einziges Schaltelement, falls sicher gestellt werden kann, dass eine bestimmte Umrichtereinrichtung weiterhin betreibbar bleiben wird, insbesondere wenn sie robuster ausgelegt, beziehungsweise redundant eingerichtet ist. Mittels einer Kommunikations-Steuerleitung zwischen den beiden Umrichtereinrichtungen können Fehlermeldungen, Nullstromregelinformationen und Synchronisierungsinformationen ausgetauscht werden, wodurch ein effizienter Doppelumrichterbetrieb ermöglicht werden kann.

**Patentansprüche**

1. Notbetriebsfähige Pitchantriebsschaltung (50, 52, 54) für eine Wind- oder Wasserkraftanlage (80), umfassend zumindest eine Gleichrichtereinheit (14), zumindest einen DC-Zwischenkreis (18), eine erste Wechselrichtereinheit (16, 16-1) und einen Pitch-Drehstrommotor (38) mit beidseitig kontaktierbaren Motorsträngen (30), wobei eine erste Kontaktseite (76-1) der Motorstränge (30) mit der ersten Wechselrichtereinheit (16, 16-1) verbunden ist, eine zweite Kontaktseite (76-2) der Motorstränge (30) mit einer zweiten Wechselrichtereinheit (16, 16-2) verbunden ist, und zumindest ein Schaltelement (40, 44, 46) mit zumindest einer Kontaktseite (76) der Motorstränge (30) verbunden ist, so dass in einem Normalbetrieb eines ersten Schaltzustands des Schaltelements (40, 44, 46) die Motorstränge (30) mittels beider Wechselrichtereinheiten (16, 16-1, 16-2) bestrombar sind, und in einem Notbetrieb eines zweiten Schaltzustands des Schaltelements (40, 44, 46) die Motorstränge (30) mittels einer einzigen Wechselrichtereinheit (16, 16-1, 16-2) bestrombar sind, **dadurch gekennzeichnet,** **dass** jede Wechselrichtereinheit (16, 16-1, 16-2) mit einer Gleichrichtereinheit (14-1, 14-2) mit DC-Zwischenkreis (18, 18-1, 18,2) zur Bildung einer unabhängigen Umrichtereinrichtung (13, 13-1, 13-2) verbunden ist, wobei jede Umrichtereinrichtung (13, 13-1, 13-2) über ein Entkopplungs-Schaltelement (40, 48) mit einem Versorgungsnetz (12) schaltbar verbunden ist, und jede Wechselrichtereinheit (16, 16-1, 16-2) über zumindest ein Entkopplungs-Schaltelement (40, 48) mit den Motorsträngen (30) einer Kontaktseite (76) schaltbar verbunden ist, und beide Wechselrichtereinheiten (16, 16-1, 16-2) mit einer Bremschoppereinheit (66) verbunden sind.

2. Schaltung nach Anspruch 1, **gekennzeichnet dadurch,** **dass** im zweiten Schaltzustand des Schaltelements (40, 44) eine Kontaktseite (76) der Motorstränge (30) zur Bildung einer Y-Schaltung kurzschließbar ist, wobei bevorzugt jede Kontaktseite (76-1, 76-2) mit einem Schaltelement (40, 44-1, 44-2) verbunden ist.

3. Schaltung nach Anspruch 1, **gekennzeichnet dadurch,** **dass** im zweiten Schaltzustand des Schaltelements (40, 46) die beiden Kontaktseiten (76-1, 76-2) der Motorstränge (30) zur Bildung einer ∆-Schaltung miteinander verbindbar sind.

4. Schaltung nach Anspruch 2 und 3, **gekennzeichnet dadurch,** **dass** zumindest ein, bevorzugt zwei, Y-Schaltelemente (40, 44-1, 44-2) auf gegenüberliegenden Kontaktseiten (76-1, 76-2) zur Bildung einer Y-Schaltung und ein weiteres ∆-Schaltelement (40, 46) zur Bildung einer ∆-Schaltung in der zweiten Schaltstellung mit den Motorsträngen (30) verbunden sind.

5. Schaltung nach Anspruch 2 und 3, **gekennzeichnet dadurch,** **dass** zumindest ein Schaltelement (40, 44, 46) ein Halbleiterschaltelement (56) ist.

6. Schaltung nach einem der vorangegangenen Ansprüche, **gekennzeichnet dadurch,** **dass** die beiden DC-Zwischenkreise (18, 18-1, 18-2) der beiden Umrichtereinrichtungen (13, 13-1, 13-2) miteinander verbunden sind.

7. Schaltung nach einem der vorgenannten Ansprüche, **gekennzeichnet dadurch,** **dass** die beiden Umrichtereinrichtungen (13, 13-1, 13-2) über einen sekundärseitig doppelt ausgeführten Trenntransformator (62) an ein Versorgungsnetz (12) angeschlossen sind, wobei die beiden Zwischenkreise (18, 18-1, 18-2) elektrisch zumindest schaltbar miteinander verbunden sind.

8. Schaltung nach einem der vorangegangenen Ansprüche, **gekennzeichnet dadurch,** **dass** eine Nullstromreglereinheit mit beiden Wechselrichtereinheiten (16, 16-1, 16-2) verbunden ist, um im Normalbetrieb einen Nullstrom durch die Motorstränge (30) zu minimieren.

9. Schaltung nach einem der vorangegangenen Ansprüche, **gekennzeichnet dadurch,** **dass** zumindest an einem DC-Zwischenkreis (18, 18-1, 18-2) ein DC-Notenergiespeicher (68) zumindest schaltbar zur Spannungsversorgung des Zwischenkreises (18, 18-1, 18-2) bei Ausfall der netzbasierten Gleichspannungsversorgung verbunden ist.

**10.** Wind- oder Wasserkraftanlage (80) mit einer Pitchantriebsvorrichtung (92) zur Verstellung des Pitchwinkels zumindest eines Rotorblatts,
**dadurch gekennzeichnet,**
**dass** die Pitchantriebsvorrichtung (92) eine notbetriebsfähige Pitchantriebsschaltung (50, 52, 54) nach einem der vorangegangenen Ansprüche enthält.

**11.** Verfahren zum Betrieb einer Pitchantriebsschaltung (50, 52, 54) nach einem der vorgenannten Ansprüche 1 bis 9,
**dadurch gekennzeichnet,**
**dass** in einem Normalbetrieb einer ersten Schaltstellung des Schaltelements (40, 44, 46) die Motorstränge (30) des Drehstrommotors (38) mittels beider Wechselrichtereinheiten (16, 16-1, 16-2) bestromt werden;
und in einem Notbetrieb, insbesondere bei Ausfall einer Wechselrichtereinheit (16, 16-1, 16-2) oder einer Umrichtereinrichtung (13, 13-1, 13-2), das Schaltelement (40, 46) in die zweite Schaltstellung schaltet, wobei der Drehstrommotor (38) mittels der verbleibenden Wechselrichtereinheit (16, 16-1, 16-2) betreibbar ist.

**12.** Verfahren nach Anspruch 11,
**gekennzeichnet dadurch,**
**dass** eine Umschaltung zwischen Normalbetrieb und Notbetrieb in Abhängigkeit eines Antriebsverlusts des Drehstrommotors (38), einem Ausfall oder Verringern der DC-Zwischenkreisspannung oder ei-ner nicht synchronisierten Wechselrichter-Aus-gangsspannung erfolgt.

**13.** Verfahren nach Anspruch 11 oder 12,
**gekennzeichnet dadurch,**
**dass** im Falle intakter Wechselrichtereinheiten (16, 16-1, 16-2) oder Umrichtereinrichtungen (13, 13-1, 13-2) ein alternierender Notbetrieb unter abwech-selnder Verwendung der beiden Wechselrichterein-heiten (16, 16-1, 16-2) bzw. Umrichtereinrichtungen (13, 13-1, 13-2) über einen längeren Zeitraum er-folgt, insbesondere innerhalb vorbestimmbarer Zei-tintervalle oder während vorbestimmbarer Antriebs-phasen erfolgt, und dass zur Antriebsleistungsstei-gerung bedarfsweise, insbesondere innerhalb be-stimmter Antriebsphasen, auf einen Normalbetrieb umgeschaltet wird.

**Claims**

**1.** Pitch drive circuit (50, 52, 54) which can operate in emergency mode for a wind or water power system (80), comprising at least one rectifier unit (14), at least one DC intermediate circuit (18), a first inverter unit (16, 16-1) and a three-phase pitch motor (38) with motor phases (30) that can be contacted on both sides, where a first contact side (76-1) of the motor phases (30) is connected to the first inverter unit (16, 16-1), a second contact side (76-2) of the motor phases (30) is connected to a second inverter unit (16, 16-2), and at least one switching element (40, 44, 46) is connected to at least one contact side (76) of the motor phases (30), such that during a normal operation of a first switching state of the switching element (40, 44, 46) the motor phases (30) can be supplied with current by both inverter units (16, 16-1, 16-2), and in an emergency operation of a second switching state of the switching element (40, 44, 46) the motor phases (30) can be supplied with current by a single inverter unit (16, 16-1, 16-2), **characterized in that,**
each inverter unit (16, 16-1, 16-2) is connected to a rectifier unit (14-1, 14-2) with DC intermediate circuit (18, 18-1, 18-2) to form an independent converter device (13, 13-1, 13-2), where each converter device (13, 13-1, 13-2) is switchably connected to a supply network (12) via a decoupling switching element (40, 48) and each inverter unit (16, 16-1, 16-2) is switchably connected to the motor phases (30) of a contact side (76) via at least one decoupling switching element (40, 48), and both inverter units (16, 16-1, 16-2) are connected to a brake chopper unit (66).

**2.** Circuit according to claim 1,
**characterized in that**
in the second switching state of the switching element (40, 44) a contact side (76) of the motor phases (30) can be short-circuited to form a Y-circuit, where each contact side (76-1, 76-2) is preferably connected to one switching element (40, 44-1, 44-2).

**3.** Circuit according to claim 1,
**characterized in that**
in the second switching state of the switching element (40, 46) the two contact sides (76-1, 76-2) of the motor phases (30) can be connected to one another to form a Δ-circuit.

**4.** Circuit according to claims 2 and 3,
**characterized in that**
at least one and preferably two Y-switching elements (40, 44-1, 44-2) on opposite contact sides (76-1, 76-2) are connected to the motor phases (30) to form a Y-circuit, and that a further Δ-switching element (40, 46) is connected to the motor phases (30) to form a Δ-circuit in the second switching position.

**5.** Circuit according to claims 2 and 3,
**characterized in that**
at least one switching element (40, 44, 46) is a semi-conductor switching element (56).

**6.** Circuit according to one of the preceding claims,

**characterized in that**
both DC intermediate circuits (18, 18-1, 18-2) of the two converter devices (13, 13-1, 13-2) are connected to one another.

7. Circuit according to one of the preceding claims, **characterized in that**
the two converter devices (13, 13-1, 13-2) are connected to a supply network (12) via an isolating transformer (62) provided twice on the secondary side, where the two intermediate circuits (18, 18-1, 18-2) are electrically connected to one another at least switchably.

8. Circuit according to one of the preceding claims, **characterized in that**
a zero current control unit is connected to both inverter units (16, 16-1, 16-2) in order to minimize a zero current through the motor phases (30) in normal operation.

9. Circuit according to one of the preceding claims, **characterized in that**
a DC emergency energy storage device (68) is connected at least switchably to at least one DC intermediate circuit (18, 18-1, 18-2) for voltage supply to the intermediate circuit (18, 18-1, 18-2) in the event of failure of the grid-based DC voltage supply.

10. Wind or water power system (80) with a pitch drive device (92) for adjustment of the pitch angle of at least one rotor blade,
**characterized in that**
the pitch drive device (92) comprises a pitch drive circuit (50, 52, 54) which can operate in emergency according to one of the preceding claims.

11. Method for the operation of a pitch drive circuit (50, 52, 54) according to one of the preceding claims 1 to 9,
**characterized in that**
in a normal operating mode of a first switching position of the switching element (40, 44, 46) the motor phases (30) of the three-phase motor (38) are supplied with current by both inverter units (16, 16-1, 16-2);
and that in an emergency operating mode, in particular in the event of failure of an inverter unit (16, 16-1, 16-2) or a converter device (13, 13-1, 13-2), the switching element (40, 44, 46) switches to the second switching position, where the three-phase motor (38) can be operated by the remaining inverter unit (16, 16-1, 16-2).

12. Method according to claim 11,
**characterized in that**
switching between normal operation and emergency operation is carried out as a function of a drive loss of the three-phase motor (38), a failure of or a reduction in the DC intermediate circuit voltage or a non-synchronized inverter output voltage.

13. Method according to claim 11 or 12,
**characterized in that**
in the case of intact inverter units (16, 16-1, 16-2) or converter devices (13, 13-1, 13-2), an alternating emergency operation takes place over a longer period with alternating usage of both inverter units (16, 16-1, 16-2) / converter devices (13, 13-1, 13-2), in particular within time intervals that can be predetermined or during drive phases that can be predetermined, and **in that** switching to a normal operation takes place to increase the drive output as required, in particular during certain drive phases.

**Revendications**

1. Circuit d'entraînement de pas (50, 52, 54) apte à fonctionner en régime de secours pour une éolienne ou une installation hydroélectrique (80), comprenant au moins une unité de redresseur (14), au moins un circuit intermédiaire CC (18), une première unité d'onduleur (16, 16-1) et un moteur de pas triphasé (38) avec des conducteurs de phase moteur (30) pouvant être mis en contact des deux côtés, où un premier côté de contact (76-1) des conducteurs de phase moteur (30) est relié à la première unité d'onduleur (16, 16-1), un deuxième côté de contact (76-2) des conducteurs de phase moteur (30) est relié à une deuxième unité d'onduleur (16, 16-2), et où au moins un élément de commutation (40, 44, 46) est relié à au moins un côté de contact (76) des conducteurs de phase moteur (30), de sorte que dans un régime normal d'un premier état de commutation de l'élément de commutation (40, 44, 46), les conducteurs de phase moteur (30) peuvent être alimentés en courant par les deux unités d'onduleur (16, 16-1, 16-2), et dans un régime de secours d'un deuxième état de commutation de l'élément de commutation (40, 44, 46), les conducteurs de phase moteur (30) peuvent être alimentés en courant par une seule unité d'onduleur (16, 16-1, 16-2), **caractérisé en ce**
**que** chaque unité d'onduleur (16, 16-1, 16-2) est reliée à une unité de redresseur (14-1, 14-2) avec circuit intermédiaire CC (18, 18-1, 18-2) pour former un dispositif convertisseur (13, 13-1, 13-2) indépendant, sachant que chaque dispositif convertisseur (13, 13-1, 13-2) est relié de manière commutable à un réseau d'alimentation (12) par l'intermédiaire d'un élément de commutation de découplage (40, 48), et que chaque unité d'onduleur (16, 16-1, 16-2) est reliée de manière commutable aux conducteurs de phase moteur (30) d'un côté de contact (76) par l'intermédiaire d'au moins un élément de commutation de découplage (40, 48), et que les deux unités d'onduleur (16, 16-1, 16-2) sont reliées à une unité hacheur de freinage (66).

2. Circuit selon la revendication 1, **caractérisé en ce que** dans le deuxième état de commutation de l'élément de commutation (40, 44), un côté de contact (76) des conducteurs de phase moteur (30) peut être court-circuité pour réaliser un couplage en Y, sachant que de préférence chaque côté de contact (76-1, 76-2) est relié à un élément de commutation (40, 44-1, 44-2).

3. Circuit selon la revendication 1, **caractérisé en ce que** dans le deuxième état de commutation de l'élément de commutation (40, 46), les deux côtés de contact (76-1, 76-2) des conducteurs de phase moteur (30) peuvent être reliés entre eux pour réaliser un couplage en Δ.

4. Circuit selon les revendications 2 et 3, **caractérisé en ce qu'**au moins un, de préférence deux, élément(s) de commutation en Y (40, 44-1, 44-2) sur les côtés de contact opposés (76-1, 76-2) est/sont relié(s) aux conducteurs de phase moteur (30) pour réaliser un couplage en Y et qu'un autre élément de commutation en Δ (40, 46) est relié aux conducteurs de phase moteur (30) pour réaliser un couplage en Δ dans la deuxième position de commutation.

5. Circuit selon les revendications 2 et 3, **caractérisé en ce qu'**au moins un élément de commutation (40, 44, 46) est un élément de commutation à semi-conducteur (56).

6. Circuit selon l'une des revendications précédentes, **caractérisé en ce que** les deux circuits intermédiaires CC (18, 18-1, 18-2) des deux dispositifs convertisseurs (13, 13-1, 13-2) sont reliés entre eux.

7. Circuit selon l'une des revendications susmentionnées, **caractérisé en ce que** les deux dispositifs convertisseurs (13, 13-1, 13-2) sont connectés à un réseau d'alimentation (12) par l'intermédiaire d'un transformateur de séparation (62) en version double côté secondaire, sachant que les deux circuits intermédiaires (18, 18-1, 18-2) sont électriquement reliés entre eux au moins de manière commutable.

8. Circuit selon l'une des revendications précédentes, **caractérisé en ce**

qu'une unité de correcteur de courant homopolaire est reliée aux deux unités d'onduleur (16, 16-1, 16-2) afin de minimiser en régime normal un courant homopolaire à travers les conducteurs de phase moteur (30).

9. Circuit selon l'une des revendications précédentes, **caractérisé en ce qu'**à au moins un circuit intermédiaire CC (18, 18-1, 18-2) est relié un accumulateur de courant continu de secours (68) de manière au moins commutable pour alimenter en courant le circuit intermédiaire (18, 18-1, 18-2) en cas de panne de l'alimentation en courant continu basée sur le réseau.

10. Éolienne ou installation hydroélectrique (80) avec un dispositif d'entraînement de pas (92) destiné au réglage de l'angle de pas d'au moins une pale de rotor, **caractérisée en ce que** le dispositif d'entraînement de pas (92) comprend un circuit d'entraînement de pas (50, 52, 54) apte à fonctionner en régime de secours selon l'une des revendications précédentes.

11. Procédé pour faire fonctionner un circuit d'entraînement de pas (50, 52, 54) selon l'une des revendications 1 à 9 susmentionnées, **caractérisé en ce que** dans un régime normal d'un premier état de commutation de l'élément de commutation (40, 44, 46), les conducteurs de phase moteur (30) du moteur triphasé (38) sont alimentés en courant par les deux unités d'onduleur (16, 16-1, 16-2) ; et **que** dans un régime de secours, en particulier en cas de panne d'une unité d'onduleur (16, 16-1, 16-2) ou d'un dispositif convertisseur (13, 13-1, 13-2), l'élément de commutation (40, 44, 46) commute dans la deuxième position de commutation, le moteur triphasé (38) pouvant être mis en fonctionnement au moyen de l'unité d'onduleur (16, 16-1, 16-2) restante.

12. Procédé selon la revendication 11, **caractérisé en ce qu'**une commutation entre le régime normal et le régime de secours a lieu en cas de perte d'entraînement du moteur triphasé (38), de coupure ou de baisse de la tension CC du circuit intermédiaire ou en présence d'une tension de sortie non synchronisée de l'onduleur.

13. Procédé selon la revendication 11 ou 12, **caractérisé en ce que** dans le cas où les unités d'onduleur (16, 16-1, 16-2) ou les dispositifs convertisseurs (13, 13-1, 13-2) sont intacts, a lieu sur une période prolongée un régime de secours alternant en utilisant tour à tour les deux unités d'onduleur (16, 16-1, 16-2) ou les dispositifs convertisseurs (13, 13-1, 13-2), en particulier selon des intervalles de temps prédéfinissables ou pendant des phases d'entraînement prédéfinissables, et que pour augmenter la puissance motrice en cas de besoin, en particulier dans certaines phases d'entraînement, a lieu une commutation sur un régime normal.

Stand der Technik

Fig. 1

Stand der Technik

Fig. 2a

Stand der Technik

Fig. 2b

Fig. 3

Fig. 4

EP 2 636 144 B1

Fig. 5

EP 2 636 144 B1

Fig. 6

40, 44

40, 44, 56

74

K

a

14

Fig 7a

40

a     b

40, 56

a    K    75    b

22

40, 56

75    22

a    K    b

40, 56

74

a    K    b

74

Fig 7b

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10335575 B4
- JP 63245265 A
- WO 2010034908 A2
- WO 2009058357 A1